# EUROPEAN PATENT APPLICATION

(11) **EP 4 640 476 A1**
(43) Date of publication of application: **29.10.2025**
(21) Application number: 25172555.2
(22) Date of filing: 25.04.2025
(51) Int. Cl.: B60L 53/10, B60L 53/60, B60L 53/67, H02H 3/08, H02H 3/087, H02H 7/12, H02J 7/00, H02M 1/00, H02M 1/32, H02M 3/156, H02M 3/22, H02M 3/28, H02M 3/335, H02M 7/08, H02M 7/219

(54) **DIRECT CURRENT-DIRECT CURRENT CONVERSION APPARATUS FOR CHARGING PILE, AND CHARGING PILE**

(30) Priority: 25.04.2024 CN 202410518212
(71) Applicant: Huawei Digital Power Technologies Co., Ltd., Shenzhen, Guangdong 518043 (CN)
(72) Inventor: Pan, Denghai, Shenzhen, 518043 (CN); Liu, Yipeng, Shenzhen, 518043 (CN); Qiu, Yuping, Shenzhen, 518043 (CN)
(74) Representative: Gill Jennings & Every LLP

(57) **Abstract**

Embodiments of this application provide a direct current-direct current DC-DC conversion apparatus for a charging pile, and a charging pile. The DC-DC conversion apparatus for a charging pile includes a group of power terminals, a plurality of groups of load terminals, and a plurality of isolated DC-DC conversion circuits. An input end of each isolated DC-DC conversion circuit is connected to the group of power terminals, and output ends of the plurality of isolated DC-DC conversion circuits are connected to the plurality of groups of load terminals in a one-to-one correspondence, so that the DC-DC conversion apparatus for a charging pile forms an architecture with a single input and a plurality of independent outputs. In this way, the DC-DC for a charging pile can have high power utilization while implementing wide-range power outputs. This helps enable the charging pile to achieve a charging speed of "one second per kilometer", to provide a user with charging experience of "full charging within time for a cup of coffee", and also helps avoid a waste of charging resources and improve operation efficiency of the charging pile.

## Description

### TECHNICAL FIELD

This application relates to the charging field, and more specifically, to a direct current-direct current conversion apparatus for a charging pile, and a charging pile.

### BACKGROUND

With acceleration of a process of a carbon peaking and carbon neutrality strategy and an increase in a popularization rate of electric vehicles, an increasing quantity of cities have begun to build supercharge cities. This drives development of a charging pile toward a high-power supercharge charging pile, to quickly supplement energy for an electric vehicle with "one second per kilometer", and achieve brand-new charging experience of "full charging within time for a cup of coffee".

To meet a requirement for development of the charging pile toward high power, maximum output power of a direct current-direct current (direct current-direct current, DC-DC) conversion apparatus, as a core unit of the charging pile, is continuously increased. However, currently, required charging power for electric vehicles on the market greatly varies. When a DC-DC conversion apparatus with high maximum output power charges an electric vehicle with low required charging power, power utilization of the DC-DC conversion apparatus is low, causing a waste of charging resources and reducing operation efficiency of the charging pile.

### SUMMARY

This application provides a direct current-direct current DC-DC conversion apparatus for a charging pile, and a charging pile. The DC-DC conversion apparatus for a charging pile is designed by using an architecture with a single input and a plurality of independent outputs. This can not only implement wide-range power outputs to meet charging requirements of different electric vehicles, but also achieve high power utilization. In addition, the plurality of independent outputs may also enable the DC-DC conversion apparatus for a charging pile to provide a large quantity of charging parking spaces, and enable the DC-DC conversion apparatus for a charging pile to have a high system redundancy backup capability. Further, this helps avoid a waste of charging resources and improve operation efficiency of the charging pile.

According to a first aspect, a direct current-direct current DC-DC conversion apparatus for a charging pile is provided. The DC-DC conversion apparatus for a charging pile includes a group of power terminals, a plurality of groups of load terminals, and a plurality of isolated DC-DC conversion circuits. The group of power terminals is configured to connect to a direct current power supply. Each group of load terminals is configured to connect to a charging connector. An input end of each of the plurality of isolated DC-DC conversion circuits is connected to the group of power terminals, and output ends of the plurality of isolated DC-DC conversion circuits are connected to the plurality of groups of load terminals in a one-to-one correspondence. Each isolated DC-DC conversion circuit is configured to perform power conversion on a direct current output by the direct current power supply, and output a direct current obtained through conversion to a charging connector through a corresponding group of load terminals.

In this embodiment of this application, input ends of the plurality of isolated DC-DC conversion circuits are connected to a same group of power terminals, and the output ends of the plurality of isolated DC-DC conversion circuits are connected to the plurality of groups of load terminals in a correspondence, so that the DC-DC conversion apparatus for a charging pile forms an architecture with a single input and a plurality of independent outputs. Further, a quantity of isolated DC-DC conversion circuits operating in the apparatus may be adjusted to enable the DC-DC conversion apparatus to implement wide-range power outputs. Compared with a single-output DC-DC conversion apparatus, this can not only meet required charging power for different electric vehicles, but also enable the DC-DC conversion apparatus for a charging pile to achieve higher power utilization. Further, this helps avoid a waste of charging resources and improve operation efficiency of the charging pile.

In addition, compared with the single-output DC-DC conversion apparatus that is usually connected only to one charging connector, the DC-DC conversion apparatus for a charging pile in this embodiment of this application can be connected to a plurality of different charging connectors because the plurality of groups of load terminals separately and independently output power, so that more charging parking spaces are provided. This can further improve operation efficiency of the charging pile.

In addition, the DC-DC conversion apparatus for a charging pile in this embodiment of this application has a plurality of independent outputs. Therefore, when one output cannot operate properly, the DC-DC conversion apparatus for a charging pile may still provide a charging service for an electric vehicle through another output. In this way, compared with the single-output DC-DC conversion apparatus, the DC-DC conversion apparatus for a charging pile that has a plurality of independent outputs in this embodiment of this application has a higher system redundancy backup capability.

In an embodiment, each isolated DC-DC conversion circuit includes a primary-side circuit, a secondary-side circuit, and a transformer. The primary-side circuit is configured to convert the direct current output by the direct current power supply into an alternating current and then output the alternating current to the secondary-side circuit through the transformer. The secondary-side circuit is configured to convert the received alternating current into the direct current and then output the direct current to the corresponding group of load terminals. The DC-DC conversion apparatus for a charging pile further includes a controller and a plurality of isolation circuits. The plurality of isolation circuits are in a one-to-one correspondence with secondary-side circuits in the plurality of isolated DC-DC conversion circuits. The controller is directly connected to the primary-side circuit in each isolated DC-DC conversion circuit. The controller is further configured to send a signal to a corresponding secondary-side circuit through the isolation circuit.

It should be understood that, that the controller is directly connected to the primary-side circuit may indicate that the controller directly sends a signal to the primary-side circuit without using the isolation circuit. In other words, the controller in the DC-DC conversion apparatus for a charging pile is a primary-side controller.

In this embodiment of this application, the controller in the DC-DC conversion apparatus for a charging pile is a primary-side controller. Compared with a solution in which a secondary-side controller is used and a drive signal sent by the secondary-side controller to a primary-side circuit needs to be transmitted in an electrically isolated manner of a reinforced insulation class, the primary-side controller may directly send, to the primary-side circuit without using the isolation circuit, a drive signal for controlling a switching transistor. To be specific, the drive signal sent by the primary-side controller may not be transmitted in an electrically isolated manner of the reinforced insulation class, but only needs to meet isolation of a functional insulation class. This helps reduce design difficulty and costs of the controller in the DC-DC conversion apparatus for a charging pile.

In addition, if a secondary-side controller is used in the DC-DC conversion apparatus for a charging pile, because a plurality of secondary-side circuits in the DC-DC conversion apparatus for a charging pile are electrically isolated, a plurality of secondary-side controllers corresponding to the plurality of secondary-side circuits need to be disposed in the DC-DC conversion apparatus for a charging pile. However, because a plurality of primary-side circuits in the DC-DC conversion apparatus for a charging pile are not electrically isolated, in this embodiment of this application, all primary-side circuits in the DC-DC conversion apparatus for a charging pile can be controlled by one primary-side controller. Compared with the foregoing solution in which the plurality of secondary-side controllers are disposed, this helps further reduce costs of the DC-DC conversion apparatus for a charging pile.

In an implementation, the DC-DC conversion apparatus for a charging pile further includes a plurality of secondary-side sampling circuits. The plurality of secondary-side sampling circuits are in a one-to-one correspondence with the plurality of isolation circuits. Each of the plurality of secondary-side sampling circuits is configured to obtain an output signal of a corresponding isolated DC-DC conversion circuit, and send the output signal to the controller through a corresponding isolation circuit. The output signal includes at least one of an output current and an output voltage of the corresponding isolated DC-DC conversion circuit.

In this embodiment of this application, the controller may obtain an output voltage and/or an output current of a corresponding isolated DC-DC conversion circuit based on an output signal fed back by a secondary-side sampling circuit, and then adjust a control policy for the isolated DC-DC conversion circuit in a timely manner based on the output voltage and/or the output current, to better meet a charging requirement of an electric vehicle.

In an implementation, the primary-side circuit includes an inverter circuit, the secondary-side circuit includes a plurality of rectifier circuits, and the transformer includes a three-phase primary-side winding and a three-phase secondary-side winding. An input end of the inverter circuit is connected to the power terminal, and an output end of the inverter circuit is connected to the three-phase primary-side winding. Each phase of secondary-side winding in the three-phase secondary-side winding includes a plurality of secondary-side windings. The plurality of secondary-side windings are connected to input ends of the plurality of rectifier circuits in a one-to-one correspondence. Output ends of the plurality of rectifier circuits are connected to each other and then connected to the corresponding group of load terminals.

It should be understood that, that output ends of the plurality of rectifier circuits are connected to each other and then connected to the corresponding group of load terminals may indicate that the plurality of rectifier circuits are connected in series and/or in parallel and then connected to the corresponding group of load terminals.

In this embodiment of this application, because the plurality of rectifier circuits in each isolated DC-DC conversion circuit are connected in series and/or in parallel and then connected to the corresponding group of load terminals, voltages output by the plurality of rectifier circuits to the corresponding group of load terminals can be flexibly adjusted by switching a connection relationship between the plurality of rectifier circuits. In this way, each isolated DC-DC conversion circuit implements wide-range voltage outputs, to better meet charging voltages needed by different electric vehicles.

In an implementation, the DC-DC conversion apparatus for a charging pile further includes a plurality of protection circuits, and the plurality of protection circuits are in a one-to-one correspondence with the plurality of isolated DC-DC conversion circuits. Each protection circuit includes a switch and a diode that are connected in parallel. The switch and the diode that are connected in parallel are connected between an output end of a corresponding isolated DC-DC conversion circuit and a corresponding group of load terminals. The DC-DC conversion apparatus for a charging pile is configured to: when the output current of the isolated DC-DC conversion circuit is greater than a first preset current value, control a switch in a corresponding protection circuit to be turned on.

In this embodiment of this application, before the isolated DC-DC conversion circuit is powered on for operation, the diode in the protection circuit can prevent an impulse current from flowing back into the circuit, to improve safety of the DC-DC conversion apparatus for a charging pile, and help meet a standard requirement for charging an electric vehicle.

During operation of the isolated DC-DC conversion circuit, when the output current of the isolated DC-DC conversion circuit is large, the switch in the protection circuit may be controlled to be turned on, so that the output current of the isolated DC-DC conversion circuit is output to the load terminal through a branch in which the switch is located. This helps alleviate a problem that a large conduction loss occurs when a large output current flows through the diode, and therefore reduces a loss that occurs when the output current of the isolated DC-DC conversion circuit flows through the protection circuit, and improves efficiency of the isolated DC-DC conversion circuit.

In an implementation, the DC-DC conversion apparatus for a charging pile is further configured to: when a voltage difference between two ends of the diode is greater than a first preset voltage difference, control the switch in the protection circuit to be turned off.

In this embodiment of this application, when the voltage difference between the two ends of the diode is greater than the first preset voltage difference, a voltage difference between the output end of the isolated DC-DC conversion circuit and a load connected to the corresponding group of load terminals is large. In this case, the switch in the protection circuit may be turned off, so that the output end of the isolated DC-DC conversion circuit is connected to the corresponding group of load terminals through a branch in which the diode in the protection circuit is located, to prevent a load current from flowing back into the DC-DC conversion circuit.

In an implementation, the protection circuit further includes a fuse, and the fuse and the switch are connected in series and then connected in parallel to the diode. Alternatively, the switch and the diode that are connected in parallel are connected in series to the fuse. The fuse is configured to: when currents at the group of load terminals corresponding to the isolated DC-DC conversion circuit are greater than a second preset current value, disconnect a circuit between the output end of the isolated DC-DC conversion circuit and the corresponding group of load terminals. The second preset current value is greater than a maximum output current of the isolated DC-DC conversion circuit.

In this embodiment of this application, the fuse is disposed in the protection circuit. When the isolated DC-DC conversion circuit is short-circuited due to a failure, a current of a load connected to the corresponding load terminal flows back, so that the fuse breaks, to cut off the connection between the isolated DC-DC conversion circuit and the load, prevent a backflow current from flowing into the isolated DC-DC conversion circuit, and isolate the failed circuit.

In an implementation, the primary-side circuit includes a plurality of switching transistors. The controller is further configured to: when a difference between the output voltage of the isolated DC-DC conversion circuit and a required output voltage is greater than a second preset voltage difference, adjust switching frequencies of the plurality of switching transistors in the primary-side circuit.

In this embodiment of this application, when the output voltage of the isolated DC-DC conversion circuit that is fed back by the secondary-side sampling circuit greatly differs from the required output voltage, the controller may dynamically adjust a switching frequency of a switching transistor in the inverter circuit, to adjust the output voltage of the isolated DC-DC conversion circuit to be equal to the required output voltage. In this way, the controller implements closed-loop control on the output voltage of the isolated DC-DC conversion circuit, so that the output voltage of the isolated DC-DC conversion circuit better meets a charging requirement of a load.

In an implementation, the DC-DC conversion apparatus for a charging pile further includes an input capacitor, and each isolated DC-DC conversion circuit further includes a current sampling element. The input capacitor and an input end of an inverter circuit in each isolated DC-DC conversion circuit are connected in parallel and then connected to the group of power terminals. The current sampling element is connected in series to a connection circuit between the input capacitor and the input end of the inverter circuit. The controller is further configured to obtain a current flowing through the current sampling element.

In this embodiment of this application, because the current sampling element is connected in series to the connection circuit between the input capacitor and the input end of the inverter circuit, the current that is obtained by the controller and that flows through the current sampling element in each isolated DC-DC conversion circuit is an input current of each isolated DC-DC conversion circuit. Compared with a manner in which the current sampling element is connected in series to a connection circuit between the power terminal and the input capacitor, and the controller first obtains input currents of the plurality of isolated DC-DC conversion circuits in the DC-DC conversion apparatus for a charging pile by obtaining a current flowing through the current sampling element, and then calculates an input current of each isolated DC-DC conversion circuit, the manner of obtaining the input current of the isolated DC-DC conversion circuit in this embodiment of this application is more direct and simpler.

In an implementation, the controller is further configured to: when an input current of the isolated DC-DC conversion circuit is greater than a third preset current value, turn off the plurality of switching transistors in the primary-side circuit.

In this embodiment of this application, when the input current of the isolated DC-DC conversion circuit is large, the controller may turn off the plurality of switching transistors in the primary-side circuit, to cut off an electrical connection between the direct current power supply and the primary-side circuit, implement overcurrent protection for the DC-DC conversion apparatus for a charging pile, and improve operation safety of the DC-DC conversion apparatus for a charging pile.

In an implementation, the primary-side circuit further includes a turns-switching switch circuit, and the turns-switching switch circuit is connected to the three-phase primary-side winding. The turns-switching switch circuit is configured to switch a quantity of turns, connected to a circuit, of each phase of primary-side winding in the three-phase primary-side winding. In this way, voltages output by the three-phase secondary-side winding of the transformer to the plurality of rectifier circuits may be adjusted to further adjust voltages output by the plurality of rectifier circuits to the corresponding group of load terminals, so that each isolated DC-DC conversion circuit implements wide-range voltage outputs, to better meet charging voltages needed by different electric vehicles.

In an implementation, the inverter circuit includes three inverter bridge arms that are connected in parallel, and each phase of primary-side winding in the three-phase primary-side winding includes a first primary-side winding and a second primary-side winding. One end of each of three first primary-side windings is connected to each of three bridge arm midpoints of the three inverter bridge arms in a one-to-one correspondence. The other end of a first primary-side winding in one phase of primary-side winding is connected to one end of a second primary-side winding in the one phase of primary-side winding to form a tap. The other ends of three second primary-side windings are connected to each other. The turns-switching switch circuit includes two turns-switching switches, and the two turns-switching switches are in a one-to-one correspondence with the other two phases of primary-side windings. Each turns-switching switch includes a movable contact, a first stationary contact, and a second stationary contact. The movable contact of each turns-switching switch is connected to the other end of a first primary-side winding in one corresponding phase of primary-side winding. The first stationary contact of each turns-switching switch is connected to one end of a second primary-side winding in the corresponding phase of primary-side winding. The second stationary contact of each turns-switching switch is connected to the tap.

In this way, the movable contact and the first stationary contact of each turns-switching switch may be turned on, to switch a quantity of turns, connected to a circuit, of each phase of primary-side winding to a sum of quantities of turns of a first primary-side winding and a second primary-side winding in each phase of primary-side winding. Alternatively, the movable contact and the second stationary contact of each turns-switching switch may be turned on, to switch a quantity of turns, connected to a circuit, of each phase of primary-side winding to a quantity of turns of a first primary-side winding in each phase of primary-side winding. In this way, the quantity of turns, connected to the circuit, of each phase of primary-side winding is switched through the turns-switching switch circuit.

In an implementation, the secondary-side circuit further includes a connection-switching switch circuit, and the plurality of rectifier circuits include two rectifier circuits. Output ends of the two rectifier circuits are connected to each other through the connection-switching switch circuit and then connected to the corresponding group of load terminals. The connection-switching switch circuit is configured to switch the two rectifier circuits to be connected in series or in parallel.

In this way, the connection-switching switch circuit switches the two rectifier circuits to be connected in series, and in this case, a voltage output by the two rectifier circuits through the corresponding group of load terminals is a sum of output voltages of the two rectifier circuits. Alternatively, the connection-switching switch circuit switches the two rectifier circuits to be connected in parallel, and in this case, output voltages of all the rectifier circuits are equal, and a voltage output by the two rectifier circuits through the corresponding group of load terminals is equal to an output voltage of each rectifier circuit. Therefore, the connection-switching switch circuit may switch a connection relationship between the two rectifier circuits, to adjust voltages output by the two rectifier circuits to the corresponding group of load terminals, so that the isolated DC-DC conversion circuit implements wide-range voltage outputs.

In an implementation, an output end of each of the two rectifier circuits includes a positive output end and a negative output end, and the connection-switching switch circuit includes one series-connection switch and two parallel-connection switches. The series-connection switch is configured to connect the two rectifier circuits in series, and the two parallel-connection switches are configured to connect the two rectifier circuits in parallel. A positive output end of one of the two rectifier circuits is connected to a positive load terminal in the corresponding group of load terminals. A negative output end of the other rectifier circuit is connected to a negative load terminal in the corresponding group of load terminals. The series-connection switch is connected between a negative output end of the one rectifier circuit and a positive output end of the other rectifier circuit. One parallel-connection switch is connected between the negative output end of the one rectifier circuit and the negative output end of the other rectifier circuit. The other parallel-connection switch is connected between the positive output end of the one rectifier circuit and the positive output end of the other rectifier circuit.

In this way, the two rectifier circuits can be connected in series when the series-connection switch is turned on and the two parallel-connection switches are turned off, or the two rectifier circuits can be connected in parallel when the two parallel-connection switches are turned on and the series-connection switch is turned off. Therefore, the connection-switching switch circuit can switch the connection relationship between the two rectifier circuits through the three switches, so that the switch circuit has a simple structure. This is conducive to cost optimization.

In an implementation, each rectifier circuit includes six rectifier bridge arms that are connected in parallel, and the plurality of secondary-side windings include a first secondary-side winding and a second secondary-side winding. Two ends of each first secondary-side winding of the transformer are connected to two bridge arm midpoints of two rectifier bridge arms in the one rectifier circuit in a one-to-one correspondence, and different first secondary-side windings are connected to different rectifier bridge arms. Two ends of each second secondary-side winding of the transformer are connected to two bridge arm midpoints of two rectifier bridge arms in the other rectifier circuit in a one-to-one correspondence, and different second secondary-side windings are connected to different rectifier bridge arms.

In this embodiment of this application, a quantity of rectifier bridge arms in the rectifier circuit is increased to six. This helps reduce a loss caused by each rectifier bridge arm during operation of the rectifier circuit, and therefore improves efficiency of the DC-DC conversion apparatus for a charging pile.

According to a second aspect, a charging pile is provided. The charging pile includes a direct current bus, an alternating current-direct current AC-DC conversion apparatus, a charging connector, and the direct current-direct current DC-DC conversion apparatus according to any one of the implementations of the first aspect. The AC-DC conversion apparatus is configured to convert a received alternating current into a direct current and then output the direct current to the direct current bus. The DC-DC conversion apparatus is configured to obtain the direct current from the direct current bus, perform power conversion on the direct current, and then output the direct current to the charging connector.

For benefits of the second aspect, refer to related descriptions of the first aspect. To avoid repetition, details are not described herein again.

### BRIEF DESCRIPTION OF DRAWINGS

FIG. 1 is a diagram of a structure of a charging system according to an embodiment of this application;
FIG. 2 is a diagram of a connection structure of a charging system shown in FIG. 1;
FIG. 3 is a diagram of a structure of a DC-DC conversion apparatus for a charging pile according to an embodiment of this application;
FIG. 4 is a diagram of a structure of another DC-DC conversion apparatus for a charging pile according to an embodiment of this application;
FIG. 5 is a diagram of a structure of another DC-DC conversion apparatus for a charging pile according to an embodiment of this application;
FIG. 6 is a schematic of a circuit topology of a DC-DC conversion apparatus for a charging pile according to an embodiment of this application;
FIG. 7 is a schematic of a circuit topology of an example isolated DC-DC conversion circuit 330a shown in FIG. 6 according to an embodiment of this application;
FIG. 8 is a schematic of a circuit topology of an example isolated DC-DC conversion circuit 330a shown in FIG. 6 according to an embodiment of this application; and
FIG. 9 is a diagram of a structure of a charging pile according to an embodiment of this application.

### DESCRIPTION OF EMBODIMENTS

For ease of understanding embodiments of this application, the following descriptions are provided before embodiments of this application are described.

In descriptions of embodiments of this application, a "connection" may be an electrical connection, and the electrical connection may be understood as a direct electrical connection or an indirect electrical connection between two electrical elements for implementing signal transmission. For example, that A is connected to B may be understood as that A is directly electrically connected to B, or may be understood as that A is indirectly electrically connected to B through one or more other electrical elements.

In embodiments of this application, the terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In addition, in descriptions of embodiments of this application, "a plurality of" means two or more, and "at least one" and "one or more" mean one, two, or more.

In descriptions of embodiments of this application, unless otherwise specified, "and/or" describes only an association relationship between associated objects and indicates that three relationships may exist. For example, A and/or B may indicate the following three cases: Only A exists, both A and B exist, and only B exists.

The following describes technical solutions of this application with reference to accompanying drawings.

First, for ease of understanding technical solutions provided in embodiments of this application, an application scenario to which embodiments of this application are applicable is described.

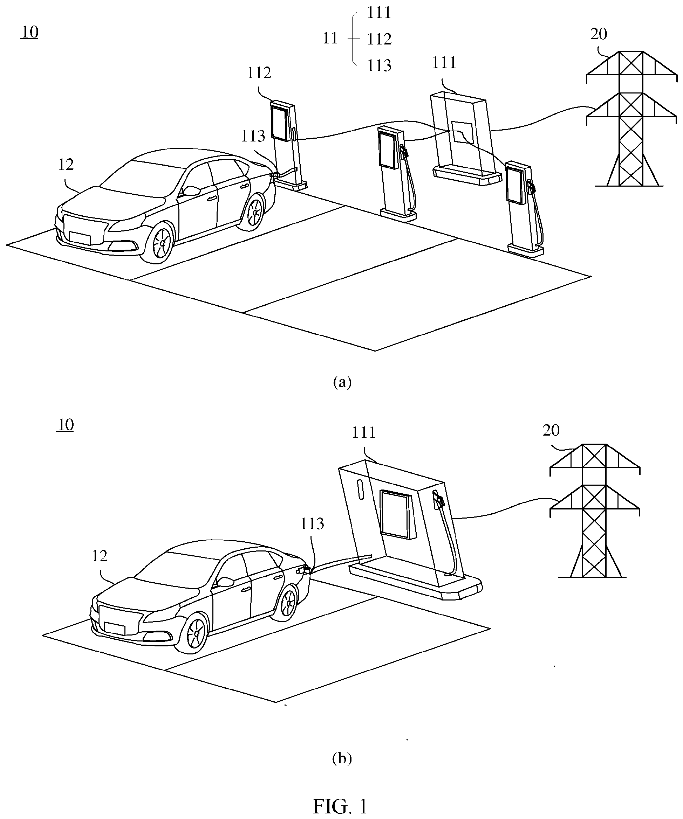

FIG. 1 is a diagram of a structure of a charging system 10 according to an embodiment of this application.

As shown in (a) and (b) in FIG. 1, the charging system 10 may include a charging pile 11 and an electric vehicle 12. The charging pile 11 is configured to: receive an alternating current output by a power grid 20, convert the alternating current into a stable direct current, and then transmit the stable direct current to the electric vehicle 12, to charge the electric vehicle 12. Alternatively, the electric vehicle 12 may reversely output electric energy to the power grid 20 through the charging pile 11.

In some embodiments, as shown in (a) in FIG. 1, the charging pile 11 is a split charging pile. Specifically, the charging pile 11 includes a charging host 111, at least one charging terminal 112, and at least one charging connector 113. The charging host 111 is connected to each charging terminal 112. The at least one charging terminal 112 is connected to the at least one charging connector 113. Each charging connector 113 is configured to connect to the electric vehicle 12. During specific implementation, one charging terminal 112 is connected to one or more charging connectors 113, and the one or more charging connectors 113 are connected to one electric vehicle 12.

The charging host 111 includes a plurality of charging modules. The plurality of charging modules are configured to convert an alternating current output by the power grid 20 into a stable direct current, and then transmit the stable direct current to the charging terminal 112. The plurality of charging modules include, for example, an alternating current-direct current (alternating current-direct current, AC-DC) conversion apparatus and a DC-DC conversion apparatus. The charging terminal 112 transmits the stable direct current to the electric vehicle 12 through a connected charging connector 113.

The charging terminal 112 includes a housing, a human-computer interaction interface, a charging control unit, a metering and billing unit, and the like, and is configured to perform information exchange, energy transmission, metering and billing, and the like with the electric vehicle 12.

The electric vehicle 12 is a vehicle driven by electric energy to travel. The electric vehicle 12 is a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. 1, the charging pile 11 is an integrated charging pile. Specifically, a human-computer interaction interface, a charging control unit, a metering and billing unit, and the like in the charging pile 11 are directly arranged in a charging host 111. Therefore, the charging pile 11 includes only the charging host 111 and at least one charging connector 113 connected to the charging host 111, and does not include a charging terminal 112. During specific implementation, a plurality of charging modules in the charging host 111 convert an alternating current output by the power grid 20 into a stable direct current, and then directly transmit the stable direct current to the electric vehicle 12 through the charging connector 113.

The following further describes a structure of the charging host 111 by using the charging system 10 shown in (a) in FIG. 1 as an example.

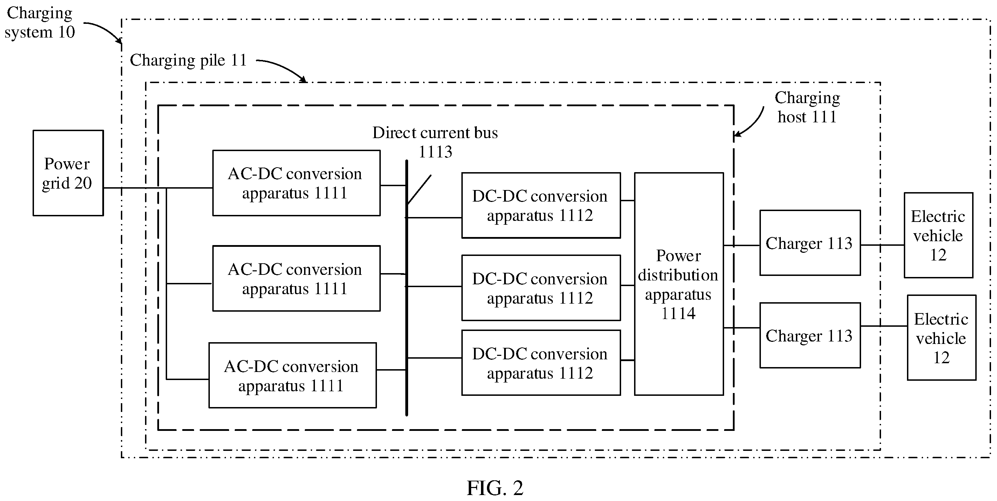

FIG. 2 is a diagram of an example connection structure of the charging system 10 shown in (a) and (b) in FIG. 1.

With reference to FIG. 2, the charging host 111 includes a plurality of AC-DC conversion apparatuses 1111, a plurality of DC-DC conversion apparatuses 1112, a direct current bus 1113, and a power distribution apparatus 1114. An input end of each AC-DC conversion apparatus 1111 is connected to the power grid 20, and an output end of each AC-DC conversion apparatus 1111 is connected to the direct current bus 1113. An input end of each DC-DC conversion apparatus 1112 is connected to the direct current bus 1113, and an output end of each DC-DC conversion apparatus 1112 is connected to an input end of the power distribution apparatus 1114. An output end of the power distribution apparatus 1114 is connected to the charging connector 113. During specific implementation, the power distribution apparatus 1114 may be connected to the charging connector 113 through, for example, the charging terminal 112.

The plurality of AC-DC conversion apparatuses 1111 are configured to receive an alternating current output by the power grid 20, convert the alternating current into direct currents, and then output the direct currents to the direct current bus 1113. The plurality of DC-DC conversion apparatuses 1112 are configured to obtain direct currents from the direct current bus 1113, further convert the obtained direct currents into direct currents applicable to the electric vehicle 12, and then output the direct currents to the power distribution apparatus 1114. The power distribution apparatus 1114 is configured to dynamically distribute, based on charging power actually needed by the electric vehicle 12, the direct currents output by the plurality of DC-DC conversion apparatuses 1112, and transmit distributed charging power to the electric vehicle 12 through the charging connector 113.

As described in the background, an increasing quantity of cities have begun to build supercharge cities. This drives continuous evolution of the charging pile 11 toward a supercharge charging pile. Correspondingly, the DC-DC conversion apparatus 1112 develops toward high power, and maximum output power of the DC-DC conversion apparatus 1112 is continuously increased. For example, the maximum output power of the DC-DC conversion apparatus 1112 has been increased from 20 kW or 30 kW in an early stage to 40 kW or 60 kW.

However, currently, there are a large quantity of types of existing electric vehicles 12 on the market, and required charging power for different types of electric vehicles 12 may greatly differs. For example, during charging of some supercharge electric vehicles 12, maximum output power that needs to be provided by the DC-DC conversion apparatus 1112 is 60 kW, and during charging of some non-supercharge electric vehicles 12, maximum output power that needs to be provided by the DC-DC conversion apparatus 1112 is 20 kW. In addition, required charging power for a same electric vehicle in different states of charge (state of charge, SOC) may also greatly differ. However, an existing DC-DC conversion apparatus 1112 is usually designed with a single output. Consequently, power utilization of a high-power DC-DC conversion apparatus 1112 that charges an electric vehicle 12 with low required charging power is low.

Based on the foregoing content, embodiments of this application provide a DC-DC conversion apparatus for a charging pile, and a charging pile. The DC-DC conversion apparatus for a charging pile is designed by using an architecture with a single input and a plurality of independent outputs. This can not only implement wide-range power outputs to meet charging requirements of different electric vehicles, but also achieve high power utilization. In addition, the plurality of independent outputs may also enable the DC-DC conversion apparatus for a charging pile to provide a large quantity of charging parking spaces, and enable the DC-DC conversion apparatus for a charging pile to have a high system redundancy backup capability. This helps enable the charging pile to achieve a charging speed of one second per kilometer, to provide a user with charging experience of "full charging within time for a cup of coffee", and also helps avoid a waste of charging resources and improve operation efficiency of the charging pile.

The DC-DC conversion apparatus for a charging pile and the charging pile that are provided in embodiments of this application are described below in detail with reference to accompanying drawings. It should be noted that, for ease of understanding, in accompanying drawings provided in embodiments of this application, a solid connection line represents a power transmission line, and a dashed connection line represents a signal transmission line.

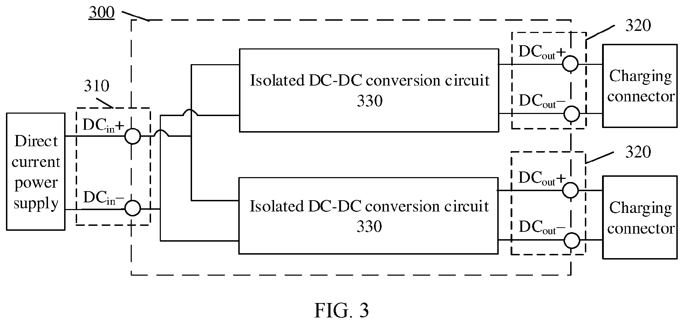

FIG. 3 is a diagram of a structure of a DC-DC conversion apparatus 300 for a charging pile according to an embodiment of this application. It should be understood that the DC-DC conversion apparatus 300 for a charging pile may be the DC-DC conversion apparatus 1112 shown in FIG. 2.

With reference to FIG. 3, the DC-DC conversion apparatus 300 for a charging pile includes a group of power terminals 310, a plurality of groups of load terminals 320, and a plurality of isolated DC-DC conversion circuits 330. The group of power terminals 310 is configured to connect to a direct current power supply, and each group of load terminals 320 is configured to connect to a charging connector, for example, connect to the charging connector 113 shown in FIG. 2. An input end of each isolated DC-DC conversion circuit 330 is connected to the group of power terminals 310, and output ends of the plurality of isolated DC-DC conversion circuits 330 are connected to the plurality of groups of load terminals 320 in a one-to-one correspondence. In this way, each isolated DC-DC conversion circuit 330 and a corresponding group of load terminals 320 form an output of the DC-DC conversion apparatus 300 for a charging pile.

For example, as shown in FIG. 3, the group of power terminals 310 includes a positive power terminal DCᵢₙ+ and a negative power terminal DCᵢₙ-, and each group of load terminals 320 includes a positive load terminal DCₒᵤₜ+ and a negative load terminal DCₒᵤₜ-. The positive power terminal DCᵢₙ+ is connected to a positive electrode of the direct current power supply and a positive electrode of the input end of each isolated DC-DC conversion circuit 330. The negative power terminal DCᵢₙ- is connected to a negative electrode of the direct current power supply and a negative electrode of the input end of each isolated DC-DC conversion circuit 330. The positive load terminal DCₒᵤₜ+ in each group of load terminals 320 is connected to a positive electrode of an output end of a corresponding isolated DC-DC conversion circuit 330. The negative load terminal DCₒᵤₜ- in each group of load terminals 320 is connected to a negative electrode of the output end of the corresponding isolated DC-DC conversion circuit 330. Further, each isolated DC-DC conversion circuit 330 is configured to receive, through a same group of power terminals 310, a direct current output by the direct current power supply, perform power conversion on the direct current, and output the direct current to a charging connector through the corresponding group of load terminals 320.

During specific implementation, the plurality of groups of load terminals 320 in the DC-DC conversion apparatus 300 for a charging pile may be connected to a plurality of charging connectors, or the plurality of groups of load terminals 320 in the DC-DC conversion apparatus 300 for a charging pile may be connected to a same charging connector. For example, the plurality of groups of load terminals 320 may be connected to a charging connector through a power distribution apparatus. The power distribution apparatus may distribute, to a plurality of charging connectors, power output by the plurality of groups of load terminals 320, or the power distribution apparatus may distribute, to a same charging connector, power output by the plurality of groups of load terminals 320.

It should be understood that, in this embodiment of this application, the isolated DC-DC conversion circuit 330 may be a DC-DC conversion circuit that is electrically isolated between an input end and an output end.

In this embodiment of this application, input ends of the plurality of isolated DC-DC conversion circuits 330 are connected to a same group of power terminals 310, and the output ends of the plurality of isolated DC-DC conversion circuits are connected to the plurality of groups of load terminals 320 in a correspondence, so that the DC-DC conversion apparatus 300 for a charging pile forms an architecture with a single input and a plurality of independent outputs. To be specific, actual output power of the DC-DC conversion apparatus 300 for a charging pile is equal to a sum of actual output power of the plurality of isolated DC-DC conversion circuits 330. In this way, a quantity of isolated DC-DC conversion circuits 330 operating in the DC-DC conversion apparatus 300 for a charging pile may be adjusted to flexibly adjust the actual output power of the DC-DC conversion apparatus 300 for a charging pile, so that the DC-DC conversion apparatus 300 for a charging pile implements wide-range power outputs, to meet charging requirements of different electric vehicles.

For example, the DC-DC conversion apparatus 300 for a charging pile in FIG. 3 includes two isolated DC-DC conversion circuits 330 and two groups of load terminals 320 correspondingly connected to the two isolated DC-DC conversion circuits 330, in other words, the DC-DC conversion apparatus 300 for a charging pile has a single input and two independent outputs. It is assumed that maximum power that can be output by each isolated DC-DC conversion circuit 330 through a corresponding group of load terminals 320 is 30 kW. In this case, the DC-DC conversion apparatus 300 for a charging pile can implement wide-range power outputs within 60 kW.

When the DC-DC conversion apparatus 300 for a charging pile needs to provide low charging power for an electric vehicle, for example, when the DC-DC conversion apparatus 300 for a charging pile needs to provide charging power of 20 kW for the electric vehicle, only one isolated DC-DC conversion circuit 330 may operate in the DC-DC conversion apparatus 300 for a charging pile, and maximum output power actually provided by the DC-DC conversion apparatus 300 for a charging pile is 30 kW. This can meet a charging requirement of the electric vehicle. In this case, power utilization of the DC-DC conversion apparatus 300 for a charging pile is 66.7%.

When the DC-DC conversion apparatus 300 for a charging pile needs to provide high charging power for an electric vehicle, for example, when the DC-DC conversion apparatus 300 for a charging pile needs to provide charging power of 60 kW for the electric vehicle, the two isolated DC-DC conversion circuits 330 in the DC-DC conversion apparatus 300 for a charging pile are both controlled to operate, and maximum output power actually provided by the DC-DC conversion apparatus 300 for a charging pile is 60 kW. In this way, the two groups of load terminals 320 in the DC-DC conversion apparatus 300 for a charging pile are used to jointly provide a load with power that meets a charging requirement. In this case, power utilization of the DC-DC conversion apparatus 300 for a charging pile is 100%.

In some solutions, when a single-output DC-DC conversion apparatus is used in a charging pile, because the DC-DC conversion apparatus usually includes only one DC-DC conversion circuit, if the DC-DC conversion apparatus still needs to implement wide-range power outputs within 60 kW, maximum output power of the DC-DC conversion circuit needs to be 60 kW.

When the single-output DC-DC conversion apparatus needs to provide low charging power for an electric vehicle, for example, when the single-output DC-DC conversion apparatus needs to provide charging power of 20 kW for the electric vehicle, the DC-DC conversion circuit is controlled to operate, and maximum output power actually provided by the single-output DC-DC conversion apparatus is 60 kW. Although a charging requirement of the electric vehicle is still met, power utilization of the single-output DC-DC conversion apparatus in this case is only 33.3%. Compared with the power utilization of 66.7% achieved by the DC-DC conversion apparatus 300 for a charging pile, the power utilization of the single-output DC-DC conversion apparatus greatly decreases.

Therefore, compared with the single-output DC-DC conversion apparatus, the DC-DC conversion apparatus 300 for a charging pile that has dual outputs in this embodiment of this application can not only implement wide-range power outputs, but also have higher power utilization. Further, this helps avoid a waste of charging resources and improve operation efficiency of the charging pile.

It should be further understood that, when the single-output DC-DC conversion apparatus is used in a charging pile, if overall power of the charging pile remains unchanged, with a continuous increase in maximum output power of the DC-DC conversion apparatus, a quantity of DC-DC conversion apparatuses in the charging pile decreases correspondingly. Because the single-output DC-DC conversion apparatus can usually be connected to only one charging connector, a quantity of charging parking spaces that can be provided by the charging pile also decreases correspondingly.

However, in this embodiment of this application, when the DC-DC conversion apparatus 300 for a charging pile is used in a charging pile, because each group of load terminals 320 in the DC-DC conversion apparatus 300 for a charging pile independently outputs power, the plurality of groups of load terminals 320 in the DC-DC conversion apparatus 300 for a charging pile can be connected to different charging connectors, to provide more charging parking spaces.

In addition, the single-output DC-DC conversion apparatus has a poor system redundancy backup capability due to the architecture with only one output. However, the DC-DC conversion apparatus 300 for a charging pile in this embodiment of this application has a plurality of independent outputs. Therefore, when one output cannot operate properly, the DC-DC conversion apparatus 300 for a charging pile may still provide a charging service for an electric vehicle through another output. This helps improve a system redundancy backup capability of the DC-DC conversion apparatus for a charging pile.

Therefore, the DC-DC conversion apparatus 300 for a charging pile that has a single input and a plurality of independent outputs in this embodiment of this application helps resolve the following problems caused by an increase in the maximum output power of the single-output DC-DC conversion apparatus: Power utilization decreases, a quantity of charging parking spaces decreases, and a system redundancy backup capability is poor.

The following further describes in detail the structure of the DC-DC conversion apparatus 300 for a charging pile with reference to accompanying drawings.

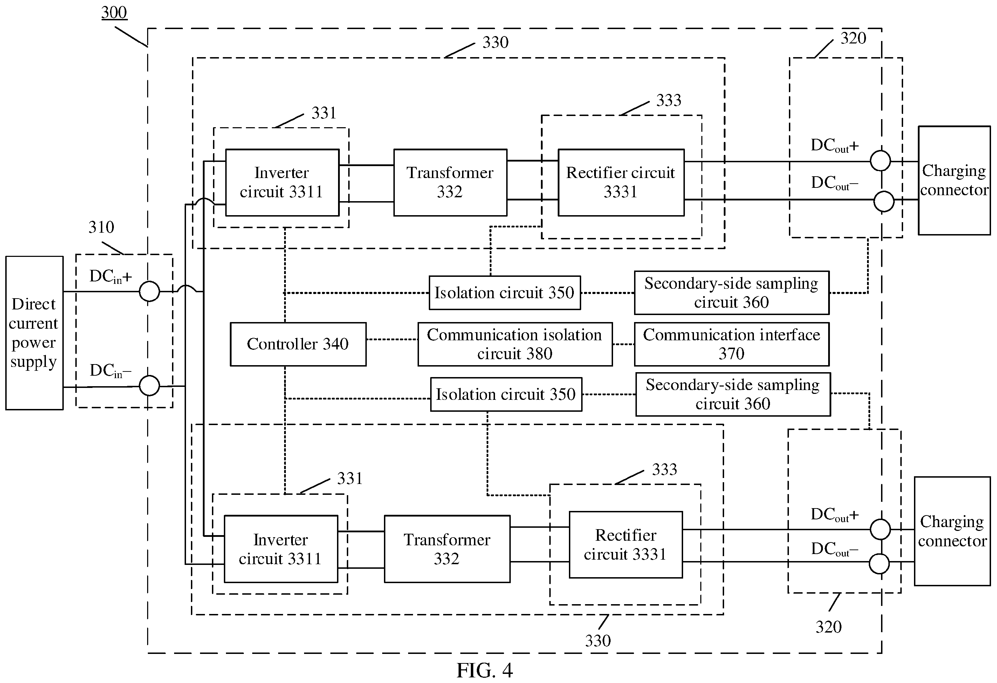

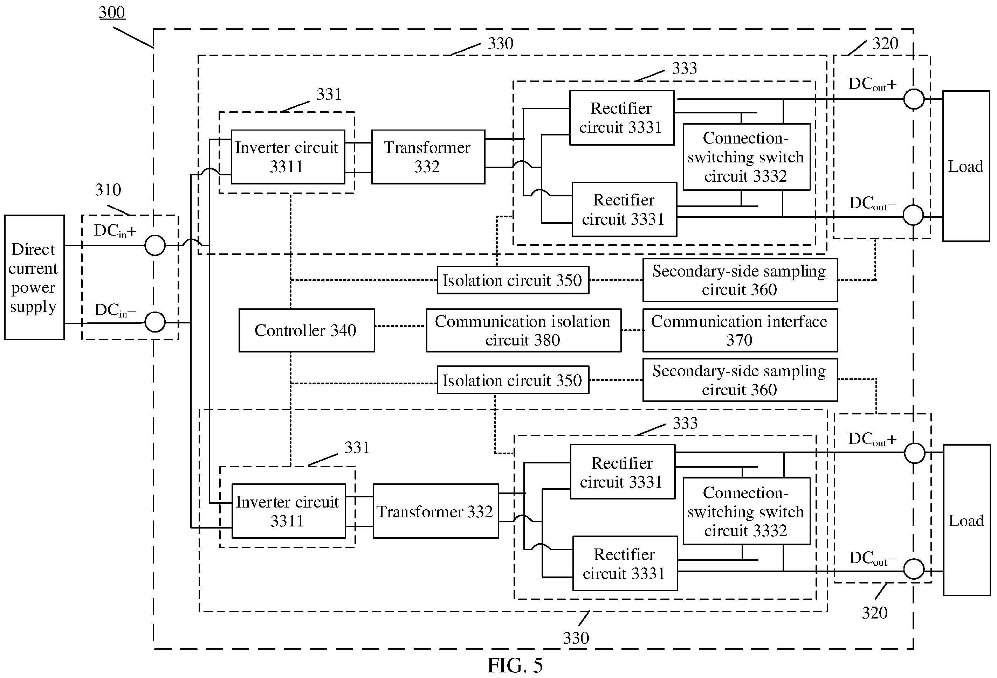

FIG. 4 and FIG. 5 each are a diagram of a structure of a DC-DC conversion apparatus 300 for a charging pile according to an embodiment of this application.

With reference to FIG. 4 and FIG. 5, in some embodiments, each isolated DC-DC conversion circuit 330 in the DC-DC conversion apparatus 300 for a charging pile includes a primary-side circuit 331, a transformer 332, and a secondary-side circuit 333. The primary-side circuit 331 is configured to receive, through a group of power terminals 310, a direct current output by a direct current power supply, convert the direct current into an alternating current, and then output the alternating current to the secondary-side circuit 333 through the transformer 332. The secondary-side circuit 333 is configured to convert the received alternating current into a direct current, and then output the direct current to a charging connector through a corresponding group of load terminals 320, to charge an electric vehicle through the charging connector.

Specifically, the primary-side circuit 331 includes an inverter circuit 3311, the transformer 332 includes a three-phase primary-side winding and a three-phase secondary-side winding, and the secondary-side circuit 333 includes at least one rectifier circuit 3331. An input end of the inverter circuit 3311 is connected to the power terminal 310, and an output end of the inverter circuit 3311 is connected to the three-phase primary-side winding of the transformer 332. The three-phase secondary-side winding of the transformer 332 is connected to an input end of the at least one rectifier circuit 3331, and an output end of the at least one rectifier circuit 3331 is connected to the corresponding group of load terminals 320.

The inverter circuit 3311 is configured to convert a direct current output by the direct current power supply into an alternating current, and then output the alternating current to the three-phase primary-side winding of the transformer 332. The three-phase primary-side winding of the transformer 332 is configured to couple the received alternating current to the three-phase secondary-side winding of the transformer 332. The at least one rectifier circuit 3331 is configured to convert the alternating current output by the three-phase secondary-side winding of the transformer 332 into a direct current, and output the direct current to the charging connector through the corresponding group of load terminals 320.

It should be understood that, during specific implementation, a plurality of primary-side circuits 331 in the DC-DC conversion apparatus 300 for a charging pile are electrically connected through a same group of power terminals 310. To ensure that a plurality of secondary-side circuits 333 in the DC-DC conversion apparatus 300 for a charging pile separately and independently output power, different secondary-side circuits 333 are electrically isolated from each other. In addition, electrical isolation of a reinforced insulation class is implemented between a primary-side circuit 331 and a secondary-side circuit 333 in each isolated DC-DC conversion circuit 330 through a transformer 332.

In an example, as shown in FIG. 4, when the secondary-side circuit 333 includes one rectifier circuit 3331, the three-phase secondary-side winding of the transformer 332 is connected to an input end of the rectifier circuit 3331, and an output end of the rectifier circuit 3331 is connected to the corresponding group of load terminals 320.

In another example, as shown in FIG. 5, when the secondary-side circuit 333 includes a plurality of rectifier circuits 3331, each phase of secondary-side winding in the three-phase secondary-side winding of the transformer 332 includes a plurality of secondary-side windings, and the plurality of secondary-side windings are connected to input ends of the plurality of rectifier circuits 3331 in a one-to-one correspondence, so that each phase of secondary-side winding separately outputs alternating currents to the plurality of rectifier circuits 3331. Output ends of the plurality of rectifier circuits 3331 are connected to each other and then connected to the corresponding group of load terminals 320, so that the plurality of rectifier circuits 3331 output all direct currents obtained through conversion to a load through the corresponding group of load terminals 320.

It should be understood that, that output ends of the plurality of rectifier circuits 3331 are connected to each other and then connected to the corresponding group of load terminals 320 may indicate that the plurality of rectifier circuits 3331 are connected in series and/or in parallel and then connected to the corresponding group of load terminals 320.

For example, the secondary-side circuit 333 shown in FIG. 5 includes two rectifier circuits 3331. The two rectifier circuits 3331 may be connected in series or in parallel and then connected to the corresponding group of load terminals 320. For another example, the secondary-side circuit 333 includes three rectifier circuits 3331. Two rectifier circuits 3331 may be connected in parallel and then connected in series to the other rectifier circuit 3331, and then the three rectifier circuits 3331 are connected to the corresponding group of load terminals 320.

Therefore, during actual application, a connection relationship between the plurality of rectifier circuits 3331 can be switched to flexibly adjust voltage values output by the plurality of rectifier circuits 3331 to the corresponding group of load terminals 320, so that the DC-DC conversion apparatus 300 for a charging pile implements wide-range voltage outputs, to better meet charging voltages needed by different electric vehicles.

For example, the secondary-side circuit 333 shown in FIG. 5 still includes two rectifier circuits 3331. When the two rectifier circuits 3331 are connected in series and then connected to the corresponding group of load terminals 320, output currents of the two rectifier circuits 3331 are equal and are both Io1. In this case, an output voltage of the corresponding group of load terminals 320 is a sum of output voltages of the two rectifier circuits 3331.

When the two rectifier circuits 3331 are connected in parallel and then connected to the corresponding group of load terminals 320, output voltages of the two rectifier circuits 3331 are equal and are both Vo1. In this case, an output voltage of the corresponding group of load terminals 320 is Vo1. In this way, the two rectifier circuits 3331 can be switched to be connected in series or in parallel to flexibly adjust a voltage value output by the corresponding group of load terminals 320, so that the corresponding group of load terminals 320 implements wide-range voltage outputs, to meet charging voltages needed by different electric vehicles.

In some embodiments, for example, the secondary-side circuit 333 shown in FIG. 5 still includes two rectifier circuits 3331. The secondary-side circuit 333 further includes a connection-switching switch circuit 3332. Output ends of the two rectifier circuits 3331 are connected to each other through the connection-switching switch circuit 3332 and then connected to the corresponding group of load terminals 320. The connection-switching switch circuit 3332 is configured to switch the two rectifier circuits 3331 to be connected in series or in parallel.

A specific circuit structure of the connection-switching switch circuit 3332 is described below. Details are not described herein.

In some embodiments, still with reference to FIG. 4 and FIG. 5, to control operation of a plurality of isolated DC-DC conversion circuits 330 in the DC-DC conversion apparatus 300 for a charging pile, the DC-DC conversion apparatus 300 for a charging pile further includes a controller 340 and a plurality of isolation circuits 350.

The plurality of isolation circuits 350 are in a one-to-one correspondence with secondary-side circuits 333 in the plurality of isolated DC-DC conversion circuits 330. The controller 340 is directly connected to a primary-side circuit 331 in each isolated DC-DC conversion circuit 330 in the DC-DC conversion apparatus 300 for a charging pile. The controller 340 is connected to a corresponding secondary-side circuit 333 through the isolation circuit 350, to send a signal to the corresponding secondary-side circuit 333 through the isolation circuit 350. The isolation circuit 350 is configured to transmit, in an electrically isolated manner, a signal between the controller 340 and the corresponding secondary-side circuit 333.

For example, the isolation circuit 350 includes an optically coupled isolator, a magnetically coupled isolator, or a capacitor isolator.

It should be understood that, that the controller 340 is directly connected to the primary-side circuit 331 indicates that the controller 340 directly sends a signal to the primary-side circuit 331 without using the isolation circuit. In other words, a signal between the controller 340 and the primary-side circuit 331 may not be transmitted in an electrically isolated manner through the isolation circuit. Therefore, in this embodiment of this application, the controller 340 is a primary-side controller disposed in the DC-DC conversion apparatus 300 for a charging pile.

During specific implementation, in some embodiments, the inverter circuit 3311 in the primary-side circuit 331 includes a plurality of switching transistors. When the DC-DC conversion apparatus 300 for a charging pile outputs charging power to the load, the controller 340 may directly send a drive signal to the inverter circuit 3311 without using the isolation circuit. The drive signal is used to drive the plurality of switching transistors in the inverter circuit 3311 to be turned on or turned off, so that the inverter circuit 3311 converts a direct current output by the direct current power supply into an alternating current, and then transmits the alternating current to the secondary-side circuit 333.

For example, the switching transistor may include a metal-oxide semiconductor field-effect transistor (metal-oxide semiconductor field-effect transistor, MOSFET), a bipolar junction transistor (bipolar junction transistor, BJT), or an insulated gate bipolar transistor (insulated gate bipolar transistor, IGBT).

It should be understood that, if the controller 340 is a secondary-side controller disposed in the DC-DC conversion apparatus 300 for a charging pile, contrary to the primary-side controller, the secondary-side controller usually sends a signal to the primary-side circuit 331 through the isolation circuit, and directly sends a signal to the secondary-side circuit 333 without using the isolation circuit.

However, different secondary-side circuits 333 in the DC-DC conversion apparatus 300 for a charging pile are electrically isolated from each other, in other words, the secondary-side circuits 333 in the plurality of isolated DC-DC conversion circuits 330 do not have a command ground. Therefore, when a secondary-side controller is used in the DC-DC conversion apparatus 300 for a charging pile, a plurality of secondary-side controllers need to be disposed in the DC-DC conversion apparatus 300 for a charging pile. The plurality of secondary-side controllers are in a one-to-one correspondence with the secondary-side circuits 333 in the plurality of isolated DC-DC conversion circuits 330, and each secondary-side controller is configured to control a corresponding secondary-side circuit 333. However, the arrangement of the plurality of secondary-side controllers leads to high costs of the DC-DC conversion apparatus 300 for a charging pile.

In addition, during actual application, to meet a requirement for reinforced insulation and isolation between the primary-side circuit 331 and the secondary-side circuit 333, a drive signal sent by the secondary-side controller to the inverter circuit 3311 usually needs to be transmitted in an electrically isolated manner of the reinforced insulation class through the isolation circuit. This increases difficulty in designing the secondary-side controller, and further increases costs of the DC-DC conversion apparatus 300 for a charging pile.

In this embodiment of this application, the controller 340 in the DC-DC conversion apparatus 300 for a charging pile is disposed as a primary-side controller. On the one hand, because different primary-side circuits 331 in the DC-DC conversion apparatus 300 for a charging pile are electrically connected to each other, the DC-DC conversion apparatus 300 for a charging pile may control each primary-side circuit 331 in the DC-DC conversion apparatus 300 for a charging pile by using one controller 340. Compared with the foregoing solution in which a plurality of secondary-side controllers need to be disposed, this better helps reduce costs of the DC-DC conversion apparatus 300 for a charging pile.

In addition, because the controller 340 is a primary-side controller, the controller 340 may directly send a drive signal to the inverter circuit 3311 in the primary-side circuit 331 without using the isolation circuit. To be specific, the drive signal may not be transmitted in an electrically isolated manner of the reinforced insulation class through the isolation circuit, but only needs to meet isolation of a functional insulation class. This helps reduce difficulty in designing the controller 340, and further reduce costs of the DC-DC conversion apparatus 300 for a charging pile.

Still with reference to FIG. 4 and FIG. 5, in some embodiments, the DC-DC conversion apparatus 300 for a charging pile further includes a plurality of secondary-side sampling circuits 360, and the plurality of secondary-side sampling circuits 360 are in a one-to-one correspondence with the plurality of isolation circuits 350. Because the plurality of isolation circuits 350 are in a one-to-one correspondence with the secondary-side circuits 333 in the plurality of isolated DC-DC conversion circuits 330, the plurality of secondary-side sampling circuits 360 are in a one-to-one correspondence with the secondary-side circuits 333 in the plurality of isolated DC-DC conversion circuits 330.

Each secondary-side sampling circuit 360 is configured to obtain an output signal of a corresponding isolated DC-DC conversion circuit 330, to be specific, obtain an output signal of a secondary-side circuit 333 in the corresponding isolated DC-DC conversion circuit 330, and send the output signal to the controller 340 through a corresponding isolation circuit 350. The output signal includes at least one of an output current and an output voltage of the corresponding isolated DC-DC conversion circuit 330.

For example, the secondary-side sampling circuit 360 includes a multi-channel analog-to-digital converter (analog-to-digital, ADC). The ADC is configured to obtain an electrical signal of the output voltage and/or the output current of the isolated DC-DC conversion circuit 330, convert the obtained electrical signal into an output signal in a digital signal form, and then send the output signal to the controller 340 through a corresponding isolation circuit 350. Further, the controller 340 can implement closed-loop control on the output voltage and/or the output current of the corresponding isolated DC-DC conversion circuit 330 based on the output signal.

For example, in some embodiments, the controller 340 is configured to adjust switching frequencies of the plurality of switching transistors in the inverter circuit 3311 when a difference between the output voltage of the isolated DC-DC conversion circuit 330 and a required output voltage is greater than a second preset voltage difference.

It should be understood that the required output voltage of the isolated DC-DC conversion circuit 330 is a voltage that the isolated DC-DC conversion circuit 330 needs to output to the load through the corresponding group of load terminals 320.

It should be further understood that, that the difference between the output voltage and the required output voltage is greater than the second preset voltage difference may indicate that the output voltage and the required output voltage are unequal within an allowed error range that does not exceed the second preset voltage difference. Correspondingly, that the difference between the output voltage and the required output voltage is less than or equal to the second preset voltage difference may indicate that the output voltage and the required output voltage are equal within an allowed error range that does not exceed the second preset voltage difference. The second preset voltage difference is, for example, 3 V, 4 V, or 5 V

Specifically, the controller 340 receives, through the isolation circuit 350, an output signal fed back by the secondary-side sampling circuit 360, and obtains an output voltage of a corresponding isolated DC-DC conversion circuit 330 based on the output signal. When the output voltage is unequal to a required output voltage, the controller 340 sends a drive signal to an inverter circuit 3311 in the isolated DC-DC conversion circuit 330. The drive signal is used to adjust switching frequencies of a plurality of switching transistors in the inverter circuit 3311, to adjust the output voltage of the isolated DC-DC conversion circuit 330 to be equal to the required output voltage. In this way, the controller 340 implements closed-loop control on the output voltage of the isolated DC-DC conversion circuit 330, so that the output voltage of the isolated DC-DC conversion circuit 330 better meets a charging voltage needed by an electric vehicle.

In some other embodiments, the secondary-side sampling circuit 360 is further configured to obtain a secondary-side temperature signal of a secondary-side circuit 333 in a corresponding isolated DC-DC conversion circuit 330, and transmit the secondary-side temperature signal to the controller 340 through a corresponding isolation circuit 350. The secondary-side temperature signal includes operation temperature of the secondary-side circuit 333.

Therefore, the controller 340 may monitor the operation temperature of the secondary-side circuit 333 in real time based on the secondary-side temperature signal, and when the operation temperature is abnormal, turn off a plurality of switching transistors in an inverter circuit 3311 in the corresponding isolated DC-DC conversion circuit 330, so that the secondary-side circuit 333 stops operation. This improves safety of the DC-DC conversion apparatus 300 for a charging pile.

During specific implementation, in addition to obtaining, through the secondary-side sampling circuit 360, an output signal and/or a temperature signal of a corresponding secondary-side circuit 333, the controller 340 is further configured to obtain an input signal and/or a primary-side temperature signal of a primary-side circuit 331 in each isolated DC-DC conversion circuit 330. The input signal includes at least one of an input current and an input voltage of the isolated DC-DC conversion circuit 330, and the primary-side temperature signal includes operation temperature of the primary-side circuit 331. Further, the controller 340 can perform feedforward control on the primary-side circuit 331 based on the obtained input signal and/or primary-side temperature signal.

For example, in some embodiments, the controller 340 is configured to: when an input current of the isolated DC-DC conversion circuit 330 is greater than a third preset current value, turn off the plurality of switching transistors in the inverter circuit 3311 in the isolated DC-DC conversion circuit 330.

Specifically, the controller 340 may obtain an input signal of the isolated DC-DC conversion circuit 330 in real time, and determine an input current of the isolated DC-DC conversion circuit 330 based on the input signal. When the input current is large, the controller 340 is configured to turn off the plurality of switching transistors in the inverter circuit 3311. Further, an electrical connection between the direct current power supply and the inverter circuit 3311 is cut off, to implement overcurrent protection for the DC-DC conversion apparatus 300 for a charging pile.

Further, in an example, the controller 340 may further calculate a valid value of the input current of the isolated DC-DC conversion circuit 330 based on the input current of the isolated DC-DC conversion circuit 330. The valid value of the input current of the isolated DC-DC conversion circuit 330 may be an average value of direct currents provided by the direct current power supply for the isolated DC-DC conversion circuit 330 within one cycle. Therefore, the controller 340 may determine, based on the valid value of the current, actual input power provided by the direct current power supply for the isolated DC-DC conversion circuit 330, to monitor an operating status of the primary-side circuit 331.

In some embodiments, still with reference to FIG. 4 and FIG. 5, to enable the controller 340 to communicate with an external apparatus, the DC-DC conversion apparatus 300 for a charging pile further includes a communication interface 370, and the controller 340 is configured to transmit a communication signal to the external apparatus through the communication interface 370.

It should be understood that the external apparatus is an apparatus other than the DC-DC conversion apparatus 300 for a charging pile. For example, when the DC-DC conversion apparatus 300 for a charging pile is used in the charging pile 11 shown in FIG. 2, the external apparatus may be the AC-DC conversion apparatus 1111.

For example, the communication interface 370 is a controller area network (controller area network, CAN) communication interface.

During actual application, to enable the DC-DC conversion apparatus 300 for a charging pile to meet a safety standard, the communication interface 370 is designed to meet electrical isolation of a basic insulation class from the primary-side circuit 331 in the DC-DC conversion apparatus 300 for a charging pile, and the communication interface 370 is designed to meet electrical isolation of the reinforced insulation class from the secondary-side circuit 333 in the DC-DC conversion apparatus 300 for a charging pile.

Further, in some embodiments, the DC-DC conversion apparatus 300 for a charging pile further includes a communication isolation circuit 380. The communication isolation circuit 380 is configured to transmit, in an isolated manner, a communication signal between the controller 340 and the communication interface 370. For example, the communication isolation circuit 380 includes an optically coupled isolator, a magnetically coupled isolator, or a capacitor isolator.

In this embodiment of this application, the communication isolation circuit 380 is used to transmit, in an isolated manner, a communication signal between the controller 340 and the communication interface 370, so that the DC-DC conversion apparatus 300 for a charging pile meets the safety standard.

The foregoing describes in detail each constituent circuit of the DC-DC conversion apparatus 300 for a charging pile with reference to accompanying drawings. The following describes a specific topology structure of each constituent circuit with reference to accompanying drawings.

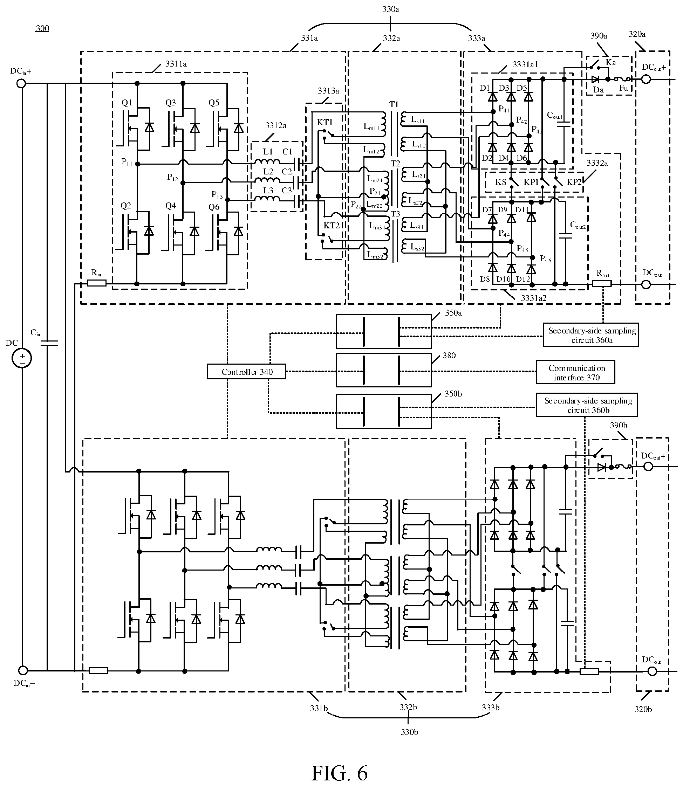

FIG. 6 is a schematic of a circuit topology of a DC-DC conversion apparatus 300 for a charging pile according to an embodiment of this application.

With reference to FIG. 6, the DC-DC conversion apparatus 300 for a charging pile includes a power terminal 310, two groups of load terminals 320, and two isolated DC-DC conversion circuits 330. To be specific, the DC-DC conversion apparatus 300 for a charging pile includes an isolated DC-DC conversion circuit 330a, an isolated DC-DC conversion circuit 330b, a group of load terminals 320a, and a group of load terminals 320b.

A positive power terminal DCᵢₙ+ of the power terminal 310 is connected to a positive electrode of a direct current power supply DC, a positive electrode of an input end of the isolated DC-DC conversion circuit 330a, and a positive electrode of an input end of the isolated DC-DC conversion circuit 330b. A negative power terminal DCᵢₙ- of the power terminal 310 is connected to a negative electrode of the direct current power supply DC, a negative electrode of the input end of the isolated DC-DC conversion circuit 330a, and a negative electrode of the input end of the isolated DC-DC conversion circuit 330b. In this way, the direct current power supply outputs direct currents to the isolated DC-DC conversion circuit 330a and the isolated DC-DC conversion circuit 330b. An output end of the isolated DC-DC conversion circuit 330a is connected to the corresponding group of load terminals 320a. An output end of the isolated DC-DC conversion circuit 330b is connected to the corresponding group of load terminals 320b.

In some embodiments, the DC-DC conversion apparatus 300 for a charging pile further includes an input capacitor Cᵢₙ. The input capacitor Cᵢₙ is connected in parallel to an input end of an inverter circuit 3311a in the isolated DC-DC conversion circuit 330a and an input end of an inverter circuit in the isolated DC-DC conversion circuit 330b, and then connected to the power terminal 310. The input capacitor Cᵢₙ is configured to filter the direct currents output by the direct current power supply to the isolated DC-DC conversion circuit 330a and the isolated DC-DC conversion circuit 330b, to ensure that the isolated DC-DC conversion circuit 330a and the isolated DC-DC conversion circuit 330b output stable voltages.

The following first describes a topology structure of each circuit in the isolated DC-DC conversion circuit 330a.

Still with reference to FIG. 6, the isolated DC-DC conversion circuit 330a includes a primary-side circuit 331a, a transformer 332a, and a secondary-side circuit 333a. The primary-side circuit 331a includes the inverter circuit 3311a. The secondary-side circuit 333a includes a rectifier circuit 3331a1 and a rectifier circuit 3331a2.

In some embodiments, the inverter circuit 33 11a includes three inverter bridge arms that are connected in parallel, to be specific, includes a first inverter bridge arm, a second inverter bridge arm, and a third inverter bridge arm. The first inverter bridge arm includes a switching transistor Q1 and a switching transistor Q2 that are connected in series. A series connection point between the switching transistor Q1 and the switching transistor Q2 serves as a bridge arm midpoint P₁₁ of the first inverter bridge arm. The second inverter bridge arm includes a switching transistor Q3 and a switching transistor Q4 that are connected in series. A series connection point between the switching transistor Q3 and the switching transistor Q4 serves as a bridge arm midpoint P₁₂ of the second inverter bridge arm. The third inverter bridge arm includes a switching transistor Q5 and a switching transistor Q6 that are connected in series. A series connection point between the switching transistor Q5 and the switching transistor Q6 serves as a bridge arm midpoint P₁₃ of the third inverter bridge arm.

One end of each of the three inverter bridge arms is connected to each other and serves as a positive electrode of an input end of the primary-side circuit 331, and is configured to connect to the positive power terminal DCᵢₙ+ of the power terminal 310. The other ends of the three inverter bridge arms are connected to each other and serve as a negative electrode of the input end of the primary-side circuit 331, and are configured to connect to the negative power terminal DCᵢₙ- of the power terminal 310. The three bridge arm midpoints P₁₁, P₁₂, and P₁₃ are used to connect to the three-phase primary-side winding of the transformer 332a. Control ends of the switching transistor Q1 to the switching transistor Q6 are configured to receive a drive signal sent by the controller 340. The drive signal is used to drive the switching transistors Q1 to Q6 to enter an on state, so that the inverter circuit 3311a converts a direct current into a three-phase alternating current and then outputs the three-phase alternating current to the three-phase primary-side winding of the transformer 332a.

In some embodiments, the isolated DC-DC conversion circuit 330a further includes a current sampling element, and the current sampling element is connected in series to a connection circuit between the input capacitor Cᵢₙ and the input end of the inverter circuit 3311a. The controller 340 is further configured to obtain a current flowing through the current sampling element. Because the current sampling element is connected in series to the connection circuit between the input capacitor Cᵢₙ and the input end of the inverter circuit 3311a, the current that is obtained by the controller 340 and that flows through the current sampling element is an input current of the isolated DC-DC conversion circuit 330a.

For example, the current sampling element may be a resistor, a Hall effect sensor, or a current sensor. As shown in FIG. 6, for example, the current sampling element is an input resistor Rᵢₙ. The input resistor Rᵢₙ is connected in series between a negative electrode of the input end of the inverter circuit 3311a and one end of the input capacitor Cᵢₙ. During specific implementation, the controller 340 is configured to capture voltages applied to two ends of the input resistor Rᵢₙ, and calculate, based on the captured voltages and a resistance value of the input resistor Rᵢₙ, a value of a current flowing through the input resistor Rᵢₙ, in other words, obtain the input current of the isolated DC-DC conversion circuit 330a. For related descriptions of the input current, refer to related descriptions of FIG. 4 and FIG. 5. Details are not described herein again.

It should be understood that, if the current sampling element is connected in series to a connection circuit between the power terminal 310 and the input capacitor Cᵢₙ, the controller 340 first obtains a sum of input currents of the isolated DC-DC conversion circuit 330a and the isolated DC-DC conversion circuit 330b by obtaining the current flowing through the current sampling element, and then calculates the input current of the isolated DC-DC conversion circuit 330a. Consequently, a manner of obtaining the input current of the isolated DC-DC conversion circuit 330a is complex. However, in this embodiment of this application, the current sampling element is connected in series to the connection circuit between the input capacitor Cᵢₙ and the input end of the inverter circuit 3311a, so that the current flowing through the current sampling element is the input current of the isolated DC-DC conversion circuit 330a, and a manner of obtaining the input current of the isolated DC-DC conversion circuit 330a is more direct and simpler.

Still with reference to FIG. 6, in some embodiments, the primary-side circuit 331a further includes a three-phase resonant circuit 3312a. The three-phase resonant circuit 3312a is configured to reduce a switching loss in the DC-DC conversion circuit 330a, to improve efficiency of the DC-DC conversion apparatus 300 for a charging pile.

The three-phase resonant circuit 3312a includes a first-phase resonant circuit, a second-phase resonant circuit, and a third-phase resonant circuit. Each phase of primary-side winding includes a resonant inductor and a resonant capacitor that are connected in series. For example, the first-phase resonant circuit includes a resonant inductor L1 and a resonant capacitor C1 that are connected in series, the second-phase resonant circuit includes a resonant inductor L2 and a resonant capacitor C2 that are connected in series, and the third-phase resonant circuit includes a resonant inductor L3 and a resonant capacitor C3 that are connected in series. One end of each phase of resonant circuit is connected to one bridge arm midpoint in the inverter circuit 3311a. The other end of each phase of resonant circuit is connected to one phase of primary-side winding of the transformer 332a. To be specific, each phase of primary-side winding of the transformer 332a is connected to one bridge arm midpoint in the inverter circuit 3311a through a resonant inductor and a resonant capacitor that are connected in series.

Still with reference to FIG. 6, in some embodiments, the primary-side circuit 331a further includes a turns-switching switch circuit 3313a. The turns-switching switch circuit 3313a is connected to the three-phase primary-side winding of the transformer 332a. The turns-switching switch circuit 3313a is configured to switch a quantity of turns, connected to a circuit, of each phase of primary-side winding in the three-phase primary-side winding.

For example, as shown in FIG. 6, each phase of primary-side winding in the three-phase primary-side winding of the transformer 332a includes a first primary-side winding and a second primary-side winding. One end of each of three first primary-side windings is connected to each of the three bridge arm midpoints P₁₁, P₁₂, and P₁₃ in the inverter circuit 3311a in a one-to-one correspondence. During specific implementation, one end of each of the three first primary-side windings may be connected to each of the three bridge arm midpoints P₁₁, P₁₂, and P₁₃ in the inverter circuit 3311a in a one-to-one correspondence through the three-phase resonant circuit 3312a, so that the three first primary-side windings receive, through the three-phase resonant circuit 3312a, the three-phase alternating current output by the inverter circuit 3311a.

In some embodiments, the turns-switching switch circuit 3313a includes two turns-switching switches. The other end of a first primary-side winding of one phase of primary-side winding in the three-phase primary-side winding is connected to one end of a second primary-side winding of the phase of primary-side winding to form a tap, and the other ends of three second primary-side windings are connected to each other. The two turns-switching switches are in a one-to-one correspondence with the other two phases of primary-side windings in the three-phase primary-side winding, and each turns-switching switch includes a movable contact, a first stationary contact, and a second stationary contact. The movable contact of each turns-switching switch is connected to the other end of a first primary-side winding in one corresponding phase of primary-side winding. The first stationary contact of each turns-switching switch is connected to one end of a second primary-side winding in the corresponding phase of primary-side winding. The second stationary contact of each turns-switching switch is connected to the tap.

For example, as shown in FIG. 6, the three-phase primary-side winding of the transformer 332a includes a first-phase primary-side winding, a second-phase primary-side winding, and a third-phase primary-side winding. The first-phase primary-side winding includes a first primary-side winding Lₘ₁₁ and a second primary-side winding Lₘ₁₂. The second-phase primary-side winding includes a first primary-side winding Lₘ₂₁ and a second primary-side winding Lₘ₂₂. The third-phase primary-side winding includes a first primary-side winding Lₘ₃₁ and a second primary-side winding Lₘ₃₂. The turns-switching switch circuit 3313a includes a turns-switching switch KT1 and a turns-switching switch KT2. The turns-switching switch KT1 and the turns-switching switch KT2 may be, for example, single-pole double-throw switches.

One end of each of the first primary-side windings Lₘ₁₁, Lₘ₂₁, and Lₘ₃₁ is connected to each of the three bridge arm midpoints P₁₁, P₁₂, and P₁₃ in the inverter circuit 3311a in a one-to-one correspondence through the three-phase resonant circuit 3312a. The other end of the first primary-side winding Lₘ₂₁ in the second-phase primary-side winding is connected to one end of the second primary-side winding Lₘ₂₂ to form a tap P₂₁. The other ends of the second primary-side winding Lₘ₁₂, Lₘ₂₂, and Lₘ₃₂ are connected to a node P₂₂. A movable contact of the turns-switching switch KT1 is connected to the other end of the first primary-side winding Lₘ₁₁ in the first-phase primary-side winding. A first stationary contact of the turns-switching switch KT1 is connected to one end of the second primary-side winding Lₘ₁₂ in the first-phase primary-side winding. A second stationary contact of the turns-switching switch KT1 is connected to the tap P₂₁. A movable contact of the turns-switching switch KT2 is connected to the other end of the first primary-side winding Lₘ₃₁ in the third-phase primary-side winding. A first stationary contact of the turns-switching switch KT2 is connected to one end of the second primary-side winding Lₘ₃₂ in the third-phase primary-side winding. A second stationary contact of the turns-switching switch KT2 is connected to the tap P₂₁. That is, the three-phase primary-side winding of the transformer 332a forms a Y-shaped connection through the two turns-switching switches.

In an implementation, the controller 340 is configured to control, through an isolation circuit 350a, the movable contact and the first stationary contact of the turns-switching switch KT1 and the movable contact and the first stationary contact of the turns-switching switch KT2 to be turned on, to connect the other end of the first primary-side winding Lₘ₁₁ to one end of the second primary-side winding Lₘ₁₂ and connect the other end of the first primary-side winding Lₘ₃₁ to one end of the second primary-side winding Lₘ₃₂. Correspondingly, a quantity of turns, connected to a circuit, of each phase of primary-side winding in the three-phase primary-side winding of the transformer 332a is a sum of quantities of turns of a corresponding first primary-side winding and a corresponding second primary-side winding. For example, a quantity of turns, connected to a circuit, of the first-phase primary-side winding is a sum of quantities of turns of the first primary-side winding Lₘ₁₁ and the second primary-side winding Lₘ₁₂.

In another implementation, the controller 340 is configured to control, through the isolation circuit 350a, the movable contact and the second stationary contact of the turns-switching switch KT1 and the movable contact and the second stationary contact of the turns-switching switch KT2 to be turned on, to connect the other end of the first primary-side winding Lₘ₁₁ to the tap P₂₁ and connect the other end of the first primary-side winding Lₘ₃₁ to the tap P₂₁. Correspondingly, a quantity of turns, connected to a circuit, of each phase of primary-side winding in the three-phase primary-side winding of the transformer 332a is a quantity of turns of a corresponding first primary-side winding. For example, a quantity of turns, connected to a circuit, of the first-phase primary-side winding is a quantity of turns of the first primary-side winding Lₘ₁₁.

Therefore, in this embodiment of this application, the controller 340 may switch, through the two turns-switching switches, a quantity of turns, connected to a circuit, of each phase of primary-side winding in the three-phase primary-side winding of the transformer 332a to be a sum of quantities of turns of a corresponding first primary-side winding and a corresponding second primary-side winding, or a quantity of turns of a corresponding first primary-side winding, so that the isolated DC-DC conversion circuit 330a implements wide-range voltage outputs, to better meet charging voltages needed by different electric vehicles.

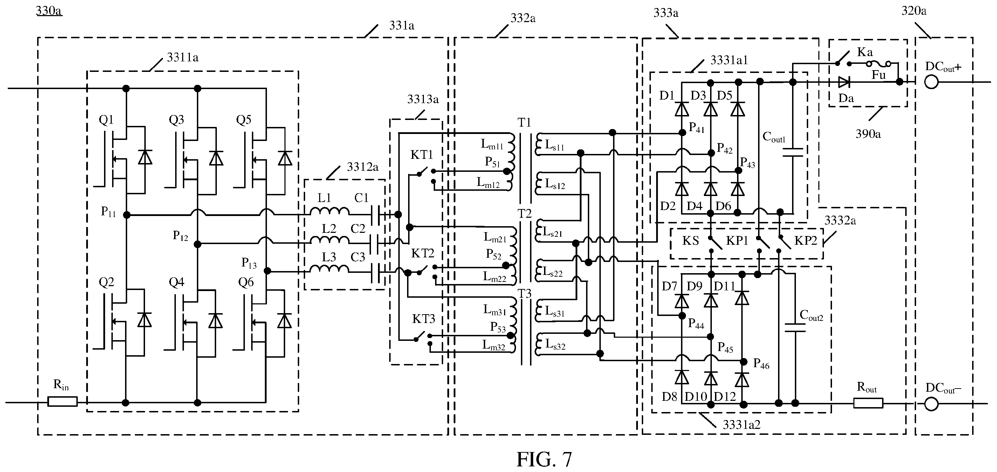

In some other embodiments, FIG. 7 is a schematic of another circuit topology of an isolated DC-DC conversion circuit 330a according to an embodiment of this application. A difference from the embodiment shown in FIG. 6 lies in that, in the embodiment shown in FIG. 7, the turns-switching switch circuit 3313a includes three turns-switching switches.

Specifically, as shown in FIG. 7, the three-phase primary-side winding of the transformer 332a includes a first-phase primary-side winding, a second-phase primary-side winding, and a third-phase primary-side winding. The first-phase primary-side winding includes a first primary-side winding Lₘ₁₁ and a second primary-side winding Lₘ₁₂. The second-phase primary-side winding includes a first primary-side winding Lₘ₂₁ and a second primary-side winding Lₘ₂₂. The third-phase primary-side winding includes a first primary-side winding Lₘ₃₁ and a second primary-side winding Lₘ₃₂. The turns-switching switch circuit 3313a includes a turns-switching switch KT1, a turns-switching switch KT2, and a turns-switching switch KT3.

One end of each of the first primary-side windings Lₘ₁₁, Lₘ₂₁, and Lₘ₃₁ is connected to each of the three bridge arm midpoints P₁₁, P₁₂, and P₁₃ in the inverter circuit 3311a in a one-to-one correspondence through the three-phase resonant circuit 3312a. The other end of the first primary-side winding Lₘ₁₁ in the first-phase primary-side winding is connected to one end of the second primary-side winding Lₘ₁₂ to form a tap P₅₁. The other end of the first primary-side winding Lₘ₂₁ in the second-phase primary-side winding is connected to one end of the second primary-side winding Lₘ₂₂ to form a tap P₅₂. The other end of the first primary-side winding Lₘ₃₁ in the third-phase primary-side winding is connected to one end of the second primary-side winding Lₘ₃₂ to form a tap P₅₃.

A movable contact of the turns-switching switch KT1 is connected to one end of the first primary-side winding Lₘ₂₁ in the second-phase primary-side winding. A first stationary contact of the turns-switching switch KT1 is connected to the tap P₅₁ in the first-phase primary-side winding. A second stationary contact of the turns-switching switch KT1 is connected to the other end of the second primary-side winding Lₘ₁₂ in the first-phase primary-side winding. A movable contact of the turns-switching switch KT2 is connected to one end of the first primary-side winding Lₘ₃₁ in the third-phase primary-side winding. A first stationary contact of the turns-switching switch KT2 is connected to the tap P₅₂ in the second-phase primary-side winding. A second stationary contact of the turns-switching switch KT2 is connected to the other end of the second primary-side winding Lₘ₂₂ in the second-phase primary-side winding. A movable contact of the turns-switching switch KT3 is connected to one end of the first primary-side winding Lₘ₁₁ in the first-phase primary-side winding. A first stationary contact of the turns-switching switch KT3 is connected to the tap P₅₃ in the third-phase primary-side winding. A second stationary contact of the turns-switching switch KT3 is connected to the other end of the second primary-side winding Lₘ₃₂ in the third-phase primary-side winding. That is, the three-phase primary-side winding of the transformer 332a forms a triangular connection through the three turns-switching switches.

In an implementation, the controller 340 is configured to control, through the isolation circuit 350a, the movable contact and the first stationary contact of the turns-switching switch KT1, the movable contact and the first stationary contact of the turns-switching switch KT2, and the movable contact and the first stationary contact of the turns-switching switch KT3 to be turned on. Correspondingly, a quantity of turns, connected to a circuit, of each phase of primary-side winding in the three-phase primary-side winding of the transformer 332a is a quantity of turns of a corresponding first primary-side winding. For example, a quantity of turns, connected to a circuit, of the first-phase primary-side winding is a quantity of turns of the first primary-side winding Lₘ₁₁.

In another implementation, the controller 340 is configured to control, through the isolation circuit 350a, the movable contact and the second stationary contact of the turns-switching switch KT1, the movable contact and the second stationary contact of the turns-switching switch KT2, and the movable contact and the second stationary contact of the turns-switching switch KT3 to be turned on. Correspondingly, a quantity of turns, connected to a circuit, of each phase of primary-side winding in the three-phase primary-side winding of the transformer 332a is a sum of quantities of turns of a corresponding first primary-side winding and a corresponding second primary-side winding. For example, a quantity of turns, connected to a circuit, of the first-phase primary-side winding is a sum of quantities of turns of the first primary-side winding Lₘ₁₁ and the second primary-side winding Lₘ₁₂.

Therefore, in this embodiment of this application, the controller 340 may switch, through the three turns-switching switches, a quantity of turns, connected to a circuit, of each phase of primary-side winding in the three-phase primary-side winding of the transformer 332a to be a sum of quantities of turns of a corresponding first primary-side winding and a corresponding second primary-side winding, or a quantity of turns of a corresponding first primary-side winding, so that the isolated DC-DC conversion circuit 330a implements wide-range voltage outputs, to better meet charging voltages needed by different electric vehicles.

The foregoing describes circuit topologies of the primary-side circuit 331a in the isolated DC-DC conversion circuit 330a and the three-phase primary-side winding of the transformer 3320a. The following describes circuit topologies of the secondary-side circuit 333a in the isolated DC-DC conversion circuit 330a and the three-phase secondary-side winding of the transformer 3320a.

With reference to FIG. 6 and FIG. 7, in some embodiments, each phase of secondary-side winding in the three-phase secondary-side winding of the transformer 332a includes a first secondary-side winding and a second secondary-side winding. Specifically, the three-phase secondary-side winding includes a first-phase secondary-side winding, a second-phase secondary-side winding, and a third-phase secondary-side winding. The first-phase secondary-side winding includes a first secondary-side winding Lₛ₁₁ and a second secondary-side winding Lₛ₁₂. The second-phase secondary-side winding includes a first secondary-side winding Lₛ₂₁ and a second secondary-side winding Lₛ₂₂. The third-phase secondary-side winding includes a first secondary-side winding Lₛ₃₁ and a second secondary-side winding Lₛ₃₂.

The rectifier circuit 3331a1 and the rectifier circuit 3331a2 each include three rectifier bridge arms that are connected in parallel. One end of each of the three first secondary-side windings Lₛ₁₁, Lₛ₂₁, and Lₛ₃₁ is connected to each of three bridge arm midpoints of three rectifier bridge arms in the rectifier circuit 3331a1 in a one-to-one correspondence. One end of each of the three second secondary-side windings Lₛ₁₂, Lₛ₂₂, and Lₛ₃₂ is connected to each of three bridge arm midpoints of three rectifier bridge arms in the rectifier circuit 3331a2 in a one-to-one correspondence.

In an implementation, as shown in FIG. 6, the other end of the first secondary-side winding Lₛ₁₁ in the first-phase primary-side winding, the other end of the first secondary-side winding Lₛ₂₁ in the second-phase primary-side winding, and the other end of the first secondary-side winding Lₛ₃₁ in the third-phase primary-side winding are sequentially connected. The other end of the second secondary-side winding Lₛ₁₂ in the first-phase primary-side winding, the other end of the second secondary-side winding Lₛ₂₂ in the second-phase primary-side winding, and the other end of the second secondary-side winding Lₛ₃₂ in the third-phase primary-side winding are sequentially connected. That is, the three-phase secondary-side winding of the transformer 332a forms a Y-shaped connection that is the same as the Y-shaped connection formed by the three-phase primary-side winding shown in FIG. 6.

In another implementation, as shown in FIG. 7, the three first secondary-side windings Lₛ₁₁, Lₛ₂₁, and Lₛ₃₁ are sequentially connected, and the three second secondary-side windings Lₛ₁₂, Lₛ₂₂, and Lₛ₃₂ are sequentially connected. For example, the other end of the first secondary-side winding Lₛ₁₁ in the first-phase primary-side winding is connected to one end of the first secondary-side winding Lₛ₂₁ in the second-phase primary-side winding, the other end of the first secondary-side winding Lₛ₂₁ in the second-phase primary-side winding is connected to one end of the first secondary-side winding Lₛ₃₁ in the third-phase primary-side winding, and the other end of the first secondary-side winding Lₛ₃₁ in the third-phase primary-side winding is connected to one end of the first secondary-side winding Lₛ₁₁ in the first-phase primary-side winding. That is, the three-phase secondary-side winding of the transformer 332a forms a triangular connection that is the same as the triangular connection formed by the three-phase primary-side winding shown in FIG. 7.

Still with reference to FIG. 6 and FIG. 7, in some embodiments, the rectifier circuit 3331a1 and the rectifier circuit 3331a2 each include three rectifier bridge arms that are connected in parallel and one output capacitor. Specifically, the rectifier circuit 3331a1 includes a first rectifier bridge arm, a second rectifier bridge arm, a third rectifier bridge arm, and an output capacitor Cₒᵤₜ₁, and the rectifier circuit 3331a2 includes a fourth rectifier bridge arm, a fifth rectifier bridge arm, a sixth rectifier bridge arm, and an output capacitor Cₒᵤₜ₂. The first rectifier bridge arm includes a diode D1 and a diode D2 that are connected in series, and a series connection point between the diode D1 and the diode D2 serves as a bridge arm midpoint P₄₁ of the first rectifier bridge arm. The second rectifier bridge arm includes a diode D3 and a diode D4 that are connected in series, and a series connection point between the diode D3 and the diode D4 serves as a bridge arm midpoint P₄₂ of the second rectifier bridge arm. By analogy, the sixth rectifier bridge arm includes a diode D11 and a diode D12 that are connected in series, and a series connection point between the diode D11 and the diode D12 serves as a bridge arm midpoint P₄₆ of the sixth rectifier bridge arm.

Each of the three bridge arm midpoints P_{41,} P₄₂, and P₄₃ in the rectifier circuit 3331a1 is connected to one end of each of the three first secondary-side windings Lₛ₁₁, Lₛ₂₁, and Lₛ₃₁ of the transformer 332a in a one-to-one correspondence. Each of the three bridge arm midpoints P₄₄, P₄₅, and P₄₆ in the rectifier circuit 3331a2 is connected to one end of each of the three second secondary-side windings Lₛ₁₂, Lₛ₂₂, and Lₛ₃₂ in a one-to-one correspondence.

One end of each of the three rectifier bridge arms in the rectifier circuit 3331a1 is connected to each other and serves as a positive electrode of an output end of the rectifier circuit 3331a1, and is configured to connect to a positive load terminal DCₒᵤₜ+ in the load terminal 320a. The other ends of the three rectifier bridge arms are connected to each other and serve as a negative electrode of the output end of the rectifier circuit 3331a1, and are configured to connect to a negative load terminal DCₒᵤₜ- in the load terminal 320a. The positive electrode and the negative electrode of the output end of the rectifier circuit 3331a1 are respectively connected to two ends of the output capacitor Cₒᵤₜ₁ and provide output voltages. Similarly, one end of each of the three rectifier bridge arms in the rectifier circuit 3331a2 is connected to each other and serves as a positive electrode of an output end of the rectifier circuit 3331a2, the other ends of the three rectifier bridge arms are connected to each other and serve as a negative electrode of the output end of the rectifier circuit 3331a2, and the positive electrode and the negative electrode of the output end of the rectifier circuit 3331a2 are respectively connected to two ends of the output capacitor Cₒᵤₜ₂ and provide output voltages.

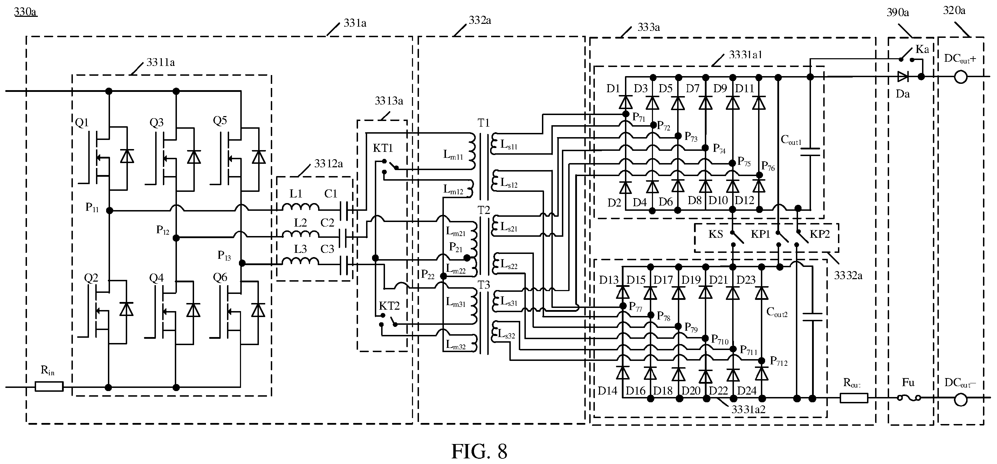

In some other embodiments, FIG. 8 is a schematic of still another circuit topology of an isolated DC-DC conversion circuit 330a according to an embodiment of this application.

A difference from the embodiments shown in FIG. 6 and FIG. 7 lies in that, in the embodiment shown in FIG. 8, the rectifier circuit 3331a1 and the rectifier circuit 3331a2 each include six rectifier bridge arms that are connected in parallel, each rectifier bridge arm includes two switching transistors that are connected in series, and a series connection point between two switching transistors in each rectifier bridge arm serves as a midpoint of the rectifier bridge arm. For example, as shown in FIG. 8, one rectifier bridge arm in the rectifier circuit 3331a1 includes a diode D1 and a diode D2 that are connected in series, and a series connection point between the diode D1 and the diode D2 serves as a bridge arm midpoint P₇₁ of the rectifier bridge arm.

When the rectifier circuit 3331a1 and the rectifier circuit 3331a2 each include six rectifier bridge arms that are connected in parallel, two ends of each first secondary-side winding of the transformer 332a are connected to two bridge arm midpoints of two rectifier bridge arms in the rectifier circuit 3331a1 in a one-to-one correspondence, and the three first secondary-side windings Lₛ₁₁, Lₛ₂₁, and Lₛ₃₁ are connected to different rectifier bridge arms. Specifically, two ends of the first secondary-side winding Lₛ₁₁ are connected to the bridge arm midpoint P₇₁ and a bridge arm midpoint P₇₂ in a one-to-one correspondence, two ends of the first secondary-side winding Lₛ₂₁ are connected to a bridge arm midpoint P₇₃ and a bridge arm midpoint P₇₄ in a one-to-one correspondence, and two ends of the first secondary-side winding Lₛ₃₁ are connected to a bridge arm midpoint P₇₅ and a bridge arm midpoint P₇₆ in a one-to-one correspondence.

In addition, two ends of each second secondary-side winding of the transformer 332a are connected to two bridge arm midpoints of two rectifier bridge arms in the rectifier circuit 3331a2 in a one-to-one correspondence, and the three second secondary-side windings Lₛ₁₂, Lₛ₂₂, and Lₛ₃₂ are connected to different rectifier bridge arms. Specifically, two ends of the second secondary-side winding Lₛ₁₂ are connected to a bridge arm midpoint P₇₇ and a bridge arm midpoint P₇₈ in a one-to-one correspondence, two ends of the second secondary-side winding Lₛ₂₂ are connected to a bridge arm midpoint P₇₉ and a bridge arm midpoint P₇₁₀ in a one-to-one correspondence, and two ends of the second secondary-side winding Lₛ₃₂ are connected to a bridge arm midpoint P₇₁₁ and a bridge arm midpoint P₇₁₂ in a one-to-one correspondence.

In this embodiment of this application, a quantity of rectifier bridge arms in each of the rectifier circuit 3331a1 and the rectifier circuit 3331a2 is increased to six. This helps reduce a loss caused by each rectifier bridge arm during operation of the rectifier circuit, and therefore improves efficiency of the isolated DC-DC conversion circuit 330a.

It should be understood that, in the foregoing embodiments, an example in which the rectifier circuit 3331a1 and the rectifier circuit 3331a2 include diodes is used for description. In some other embodiments, the diodes in the rectifier circuit 3331a1 and the rectifier circuit 3331a2 may alternatively be replaced with switching transistors according to actual production and design requirements.

Still with reference to FIG. 6 to FIG. 8, in some embodiments, the secondary-side circuit 333a further includes a connection-switching switch circuit 3332a, and the output end of the rectifier circuit 3331a1 is connected to the output end of the rectifier circuit 3331a2 through the connection-switching switch circuit 3332a. The connection-switching switch circuit 3332a includes one series-connection switch and two parallel-connection switches. The series-connection switch is configured to connect the rectifier circuit 3331a1 to the rectifier circuit 3331a2 in series. The two parallel-connection switches are configured to connect the rectifier circuit 3331a1 to the rectifier circuit 3331a2 in parallel.

Specifically, the positive electrode of the output end of the rectifier circuit 3331a1 is connected to the positive load terminal DCₒᵤₜ+ in the load terminal 320a, and the negative electrode of the output end of the rectifier circuit 3331a2 is connected to the negative load terminal DCₒᵤₜ- in the load terminal 320a. The connection-switching switch circuit 3332a includes a series-connection switch KS, a parallel-connection switch KP1, and a parallel-connection switch KP2. The series-connection switch KS is connected between the negative electrode of the output end of the rectifier circuit 3331a1 and the positive electrode of the output end of the rectifier circuit 3331a2. The parallel-connection switch KP1 is connected between the positive electrode of the output end of the rectifier circuit 3331a1 and the positive electrode of the output end of the rectifier circuit 3331a2. The parallel-connection switch KP2 is connected between the negative electrode of the output end of the rectifier circuit 3331a1 and the negative electrode of the output end of the rectifier circuit 3331a2.

In an implementation, the controller 340 is configured to control, through the isolation circuit 350a, the series-connection switch KS to be turned on, and the parallel-connection switch KP1 and the parallel-connection switch KP2 to be turned off, so that the rectifier circuit 3331a1 and the rectifier circuit 3331a2 are connected in series. Correspondingly, a voltage output by the isolated DC-DC conversion circuit 330a to the load terminal 320a = an output voltage of the rectifier circuit 3331a1 + an output voltage of the rectifier circuit 3331a2.

In another implementation, the controller 340 is configured to control, through the isolation circuit 350a, the series-connection switch KS to be turned off, and the parallel-connection switch KP1 and the parallel-connection switch KP2 to be turned on, so that the rectifier circuit 3331a1 and the rectifier circuit 3331a2 are connected in parallel. Correspondingly, a voltage output by the isolated DC-DC conversion circuit 330a to the load terminal 320a = an output voltage of the rectifier circuit 3331a1 = an output voltage of the rectifier circuit 3331a2.

Therefore, in this embodiment of this application, the controller 340 may switch, through the three switches in the connection-switching switch circuit 3332a, the rectifier circuit 3331a1 and the rectifier circuit 3331a2 to be connected in series or in parallel, to adjust values of voltages output by the two rectifier circuits through the load terminal 320a, so that the isolated DC-DC conversion circuit 330a implements wide-range voltage outputs, to better meet charging voltages of different electric vehicles.

Still with reference to FIG. 6 to FIG. 8, in some embodiments, the DC-DC conversion apparatus 300 for a charging pile further includes a plurality of protection circuits, and the plurality of protection circuits are in a one-to-one correspondence with a plurality of isolated DC-DC conversion circuits 330 in the DC-DC conversion apparatus 300 for a charging pile. For example, FIG. 6 shows an example in which the DC-DC conversion apparatus 300 for a charging pile includes a protection circuit 390a corresponding to the isolated DC-DC conversion circuit 330a, and a protection circuit 390b corresponding to the isolated DC-DC conversion circuit 330b.

The following describes a specific circuit structure of the protection circuit 390a. It should be understood that the following descriptions of the protection circuit 390a are applicable to each protection circuit in embodiments of this application, for example, applicable to the protection circuit 390b.

Still with reference to FIG. 6 to FIG. 8, the protection circuit 390a includes a diode Da, and the diode Da is connected between the output end of the isolated DC-DC conversion circuit 330a and the corresponding group of load terminals 320a, to be specific, is connected between the output ends of the two rectifier circuits in the secondary-side circuit 333a and the corresponding group of load terminals 320a.

Specifically, as shown in FIG. 6 to FIG. 8, the diode Da is connected between the positive electrode of the output end of the rectifier circuit 3331a1 and a positive load terminal DCₒᵤₜ+ in the corresponding group of load terminals 320a. Alternatively, the diode Da is connected between the negative electrode of the output end of the rectifier circuit 3331a2 and a negative load terminal DCₒᵤₜ- in the corresponding group of load terminals 320a. For ease of description and understanding, in this embodiment of this application, an example in which the diode Da is connected between the positive electrode of the output end of the rectifier circuit 3331a1 and the positive load terminal DCₒᵤₜ+ in the corresponding group of load terminals 320a is used for description.

The diode Da may perform a function of preventing backflow of an impulse current. Specifically, because the diode Da limits a current flow direction, when the isolated DC-DC conversion circuit 330a outputs a current, the diode Da is turned on in a forward direction, to transmit the output current of the isolated DC-DC conversion circuit 330a to the corresponding group of load terminals 320a. When a large external current flows into the isolated DC-DC conversion circuit 330a from the output end of the isolated DC-DC conversion circuit 330a, the diode Da is reversely cut off, so that the large backflow current cannot flow into the isolated DC-DC conversion circuit 330a through the diode Da. This can prevent an impulse current from flowing back into the isolated DC-DC conversion circuit 330a in an abnormal case in which a load connected to the load terminal 320a is short-circuited, reversely connected, or the like.

In some embodiments, still with reference to FIG. 6 to FIG. 8, the protection circuit 390a further includes a switch Ka, and the switch Ka is connected in parallel to the diode Da and then connected between the positive electrode of the output end of the rectifier circuit 3331a1 and the positive load terminal DCₒᵤₜ+ in the corresponding group of load terminals 320a.

In an example, the controller 340 is configured to: when the output current of the isolated DC-DC conversion circuit 330a is greater than a first preset current value, control the switch Ka in the protection circuit 390a to be turned on, so that the positive electrode of the output end of the rectifier circuit 3331a1 is connected to the positive load terminal DCₒᵤₜ+ through a branch in which the switch Ka is located.

It should be understood that, because the diode Da has a large conduction voltage drop, when the output current of the isolated DC-DC conversion circuit 330a is large, a large loss occurs when the output current flows through the protection circuit 390a. However, in this embodiment of this application, the diode Da and the switching transistor Ka are connected in parallel, so that a loss that occurs when the output current flows through the protection circuit 390a can be reduced.

Before the isolated DC-DC conversion circuit 330a is powered on for operation, the diode Da performs a function of preventing an impulse current from flowing back into the isolated DC-DC conversion circuit 330a.

During normal operation of the isolated DC-DC conversion circuit 330a, when the output current of the isolated DC-DC conversion circuit 330a is less than or equal to the first preset current value, in other words, when the output current of the isolated DC-DC conversion circuit 330a is small, the controller 340 controls, through the isolation circuit 350a, the switch Ka to be turned off, so that the output current is output through a branch in which the diode Da in the protection circuit 390a is located. Although the diode Da has a large conduction voltage drop, because the output current of the isolated DC-DC conversion circuit 330a is small, a small conduction loss occurs. In addition, the diode Da can still perform a function of preventing an impulse current from flowing back into the isolated DC-DC conversion circuit 330a.

When the output current of the isolated DC-DC conversion circuit 330a is greater than the first preset current value, in other words, when the output current of the isolated DC-DC conversion circuit 330a is large, the controller 340 controls, through the isolation circuit 350a, the switch Ka to be turned on, so that the output current is output through a branch in which the switch Ka in the protection circuit 390a is located. Although the output current of the isolated DC-DC conversion circuit 330a is large, because the switch Ka has a small conduction voltage drop, a small conduction loss occurs. In this way, when the output current of the isolated DC-DC conversion circuit 330a is large, a loss caused by the protection circuit 390a can be reduced, to improve efficiency of the isolated DC-DC conversion circuit 330a.

In another example, the controller 340 is configured to: when a voltage difference between two ends of the diode Da in the protection circuit 390a is greater than a first preset voltage difference, control the switch Ka in the protection circuit 390a to be turned off. Alternatively, the controller 340 is configured to: when a voltage difference between two ends of the diode Da in the protection circuit 390a is less than or equal to a first preset voltage difference, control the switch Ka in the protection circuit 390a to be turned on.

It should be understood that, when the isolated DC-DC conversion circuit 330a is powered on, if a difference between voltages applied to the two ends of the diode Da is greater than the first preset voltage difference, it is considered that a voltage difference between the output end of the isolated DC-DC conversion circuit 330a and the load connected to the load terminal 320a is large. In this case, the switch Ka is turned off, so that the output end of the isolated DC-DC conversion circuit 330a is connected to the load terminal 320a through a branch in which the diode Da in the protection circuit 390a is located, to prevent a load current from flowing back into the DC-DC conversion circuit 330a.

For example, the preset voltage difference is 5 V.

Further, in some embodiments, still with reference to FIG. 6 to FIG. 8, the protection circuit 390a further includes a fuse FU. As shown in FIG. 6, the switch Ka and the diode Da that are connected in parallel are connected in series to the fuse FU between the positive electrode of the output end of the rectifier circuit 3331a1 and the positive load terminal DCₒᵤₜ+ in the corresponding group of load terminals 320a. Alternatively, as shown in FIG. 7, the switch Kaand the fuse FU are connected in series and then connected in parallel to the diode Da. Alternatively, as shown in FIG. 8, the fuse FU is connected between the negative electrode of the output end of the rectifier circuit 3331a2 and the negative load terminal DCₒᵤₜ- in the corresponding group of load terminals 320a.

The fuse FU is configured to: when currents at the group of load terminals 320a corresponding to the isolated DC-DC conversion circuit 330a are greater than a second preset current value, disconnect a circuit between the output end of the isolated DC-DC conversion circuit 330a and the corresponding group of load terminals 320a. The second preset current value is greater than a maximum output current of the isolated DC-DC conversion circuit 330a.

Therefore, when the isolated DC-DC conversion circuit 330a is short-circuited due to an internal failure and a current of the load connected to the load terminal 320a flows back to the output end of the isolated DC-DC conversion circuit 330a, for example, when a current greater than the second preset current value flows back to the output end of the isolated DC-DC conversion circuit 330a, the fuse FU breaks. As shown in FIG. 6 and FIG. 7, the backflow current cannot flow into the isolated DC-DC conversion circuit 330a through a branch in which the switch Ka and the fuse FU are located. Alternatively, as shown in FIG. 8, the backflow current cannot flow into the isolated DC-DC conversion circuit 330a through a branch in which the fuse FU is located. This can cut off a connection between the output end of the isolated DC-DC conversion circuit 330a and the load connected to the load terminal 320a, to prevent the backflow current from flowing into the isolated DC-DC conversion circuit 330a, and isolate the failed circuit.

It should be understood that the second preset current value is a fusing current value of the fuse FU. During specific implementation, to prevent the fuse FU from breaking when the DC-DC conversion circuit 330a normally outputs a current, in this embodiment of this application, the second preset current value is set to be greater than the maximum output current of the isolated DC-DC conversion circuit 330a.

Still with reference to FIG. 6 to FIG. 8, in an example, the isolated DC-DC conversion circuit 330a further includes an output resistor Rₒᵤₜ, and the output resistor Rₒᵤₜ is connected between the output end of the isolated DC-DC conversion circuit 330a and the corresponding group of load terminals 320a. For example, as shown in FIG. 6 to FIG. 8, the output resistor Rₒᵤₜ is connected between the negative electrode of the output end of the rectifier circuit 3331a2 and the negative load terminal DCₒᵤₜ- in the corresponding group of load terminals 320a. Alternatively, the output resistor Rₒᵤₜ is connected between the positive electrode of the output end of the rectifier circuit 3331a1 and the positive load terminal DCₒᵤₜ+ in the corresponding group of load terminals 320a.

During operation of the isolated DC-DC conversion circuit 330a, the controller 340 is configured to capture voltages applied to two ends of the output resistor Rₒᵤₜ, and then calculate, based on the captured voltages and a resistance value of the output resistor Rₒᵤₜ, a value of a current flowing through Rₒᵤₜ, to obtain an output current of the isolated DC-DC conversion circuit. For related descriptions of the output current, refer to related descriptions of FIG. 4 and FIG. 5. Details are not described herein again.

It should be understood that the foregoing related descriptions of the isolated DC-DC conversion circuit 330a are applicable to the isolated DC-DC conversion circuit 330b. Therefore, for related descriptions of a topology structure of each circuit in the isolated DC-DC conversion circuit 330b, refer to the foregoing embodiments. Details are not described herein again.

The foregoing describes the DC-DC conversion apparatus 300 for a charging pile in embodiments of this application. The following describes a charging pile including the DC-DC conversion apparatus 300 for a charging pile in embodiments of this application with reference to accompanying drawings.

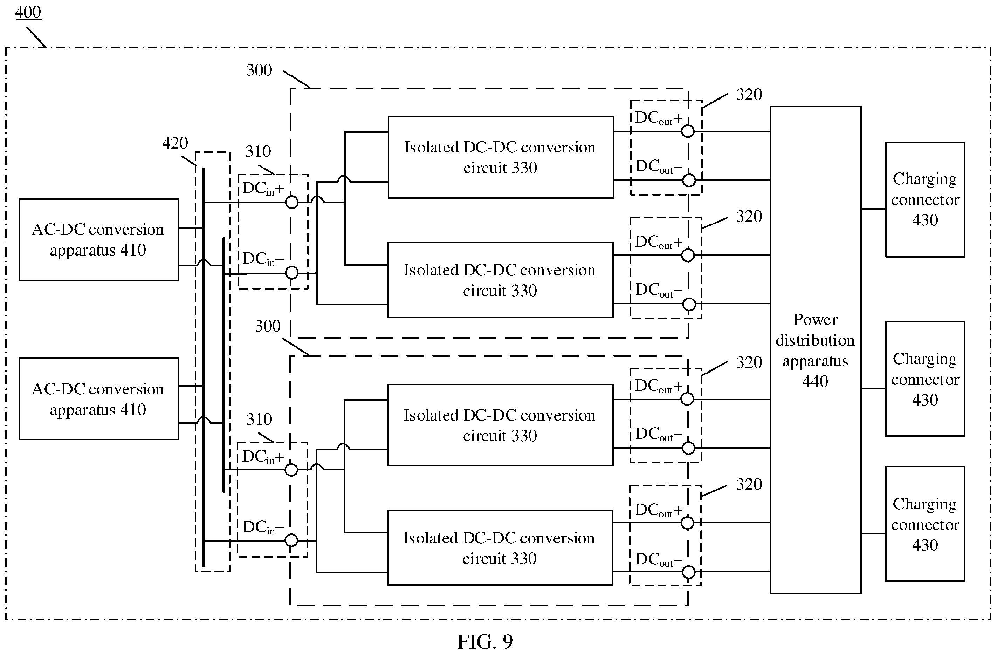

FIG. 9 is a diagram of a structure of a charging pile 400 according to an embodiment of this application.

With reference to FIG. 9, the charging pile 400 includes an AC-DC conversion apparatus 410, a direct current bus 420, a charging connector 430, and the DC-DC conversion apparatus 300 for a charging pile in the foregoing embodiments. The AC-DC conversion apparatus 410 is configured to convert a received alternating current into an direct current and then output the direct current to the direct current bus 420. The DC-DC conversion apparatus 300 for a charging pile is configured to obtain the direct current from the direct current bus 420, perform power conversion on the obtained direct current, and then output the direct current to the charging connector 430. The charging connector 430 is configured to provide the received direct current for an electric vehicle, to charge the electric vehicle.

Specifically, as shown in FIG. 9, the DC-DC conversion apparatus 300 for a charging pile includes a group of power terminals 310, a plurality of groups of load terminals 320, and a plurality of isolated DC-DC conversion circuits 330. An input end of the AC-DC conversion apparatus 410 is configured to receive an alternating current, and an output end of the AC-DC conversion apparatus 410 is connected to the group of power terminals 310 through the direct current bus 420. An input end of each isolated DC-DC conversion circuit 330 is connected to the group of power terminals 310, and output ends of the plurality of isolated DC-DC conversion circuits 330 are connected to the plurality of groups of load terminals 320 in a one-to-one correspondence. Each group of load terminals 320 is configured to connect to the charging connector 430.

For example, the charging pile 400 further includes a power distribution apparatus 440, and the plurality of groups of load terminals 320 in the DC-DC conversion apparatus 300 for a charging pile are connected to the charging connector 430 through the power distribution apparatus 440. During specific implementation, the power distribution apparatus 440 may allocate, to different charging connectors 430, power output by the plurality of groups of load terminals 320, or the power distribution apparatus 440 may allocate, to a same charging connector 430, power output by the plurality of groups of load terminals 320.

It should be understood that, in this embodiment of this application, the charging pile 400 may include one or more AC-DC conversion apparatuses 410 and one or more DC-DC conversion apparatuses 300 for a charging pile. Input ends of a plurality of AC-DC conversion apparatuses 410 are configured to receive an alternating current, and output ends of the plurality of AC-DC conversion apparatuses 410 are connected to the direct current bus 420. Input ends of a plurality of DC-DC conversion apparatus 300 for a charging pile are configured to connect to the direct current bus 420, and output ends of the plurality of DC-DC conversion apparatus 300 for a charging pile are configured to connect to the charging connector 430 through the power distribution apparatus 440.

For details about the charging pile 400, refer to related descriptions of the embodiment shown in FIG. 2. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A direct current-direct current, DC-DC conversion apparatus for a charging pile, wherein the DC-DC conversion apparatus for a charging pile comprises a group of power terminals, a plurality of groups of load terminals, and a plurality of isolated DC-DC conversion circuits;
the group of power terminals is configured to connect to a direct current power supply, and each group of load terminals is configured to connect to a charging connector;
an input end of each of the plurality of isolated DC-DC conversion circuits is connected to the group of power terminals, and output ends of the plurality of isolated DC-DC conversion circuits are connected to the plurality of groups of load terminals in a one-to-one correspondence; and
each isolated DC-DC conversion circuit is configured to perform power conversion on a direct current output by the direct current power supply, and output a direct current obtained through conversion to a charging connector through a corresponding group of load terminals.

2. The DC-DC conversion apparatus for a charging pile according to claim 1, wherein each isolated DC-DC conversion circuit comprises a primary-side circuit, a secondary-side circuit, and a transformer, the primary-side circuit is configured to convert the direct current output by the direct current power supply into an alternating current and then output the alternating current to the secondary-side circuit through the transformer, and the secondary-side circuit is configured to convert the received alternating current into the direct current and then output the direct current to the corresponding group of load terminals;
the DC-DC conversion apparatus for a charging pile further comprises a controller and a plurality of isolation circuits, and the plurality of isolation circuits are in a one-to-one correspondence with secondary-side circuits in the plurality of isolated DC-DC conversion circuits;
the controller is directly connected to the primary-side circuit in each isolated DC-DC conversion circuit; and
the controller is further configured to send a signal to a corresponding secondary-side circuit through the isolation circuit.

3. The DC-DC conversion apparatus for a charging pile according to claim 2, wherein the DC-DC conversion apparatus for a charging pile further comprises a plurality of secondary-side sampling circuits, and the plurality of secondary-side sampling circuits are in a one-to-one correspondence with the plurality of isolation circuits; and
each of the plurality of secondary-side sampling circuits is configured to obtain an output signal of a corresponding isolated DC-DC conversion circuit, and send the output signal to the controller through a corresponding isolation circuit, wherein the output signal comprises at least one of an output current or an output voltage of an output end of the corresponding isolated DC-DC conversion circuit.

4. The DC-DC conversion apparatus for a charging pile according to claim 2 or 3, wherein the primary-side circuit comprises an inverter circuit, the secondary-side circuit comprises a plurality of rectifier circuits, and the transformer comprises a three-phase primary-side winding and a three-phase secondary-side winding, wherein
an input end of the inverter circuit is connected to the power terminal, an output end of the inverter circuit is connected to the three-phase primary-side winding, each phase of secondary-side winding in the three-phase secondary-side winding comprises a plurality of secondary-side windings, the plurality of secondary-side windings are connected to input ends of the plurality of rectifier circuits in a one-to-one correspondence, and output ends of the plurality of rectifier circuits are connected to each other and then connected to the corresponding group of load terminals.

5. The DC-DC conversion apparatus for a charging pile according to any one of claims 1 to 4, wherein the DC-DC conversion apparatus for a charging pile further comprises a plurality of protection circuits, the plurality of protection circuits are in a one-to-one correspondence with the plurality of isolated DC-DC conversion circuits, each protection circuit comprises a switch and a diode that are connected in parallel, and the switch and the diode that are connected in parallel are connected between an output end of a corresponding isolated DC-DC conversion circuit and a corresponding group of load terminals; and
the DC-DC conversion apparatus for a charging pile is configured to:
when the output current of the isolated DC-DC conversion circuit is greater than a first preset current value, control a switch in a corresponding protection circuit to be turned on.

6. The DC-DC conversion apparatus for a charging pile according to claim 5, wherein the DC-DC conversion apparatus for a charging pile is further configured to:
when a voltage difference between two ends of the diode is greater than a first preset voltage difference, control the switch in the protection circuit to be turned off.

7. The DC-DC conversion apparatus for a charging pile according to claim 5 or 6, wherein the protection circuit further comprises a fuse, and the fuse and the switch are connected in series and then connected in parallel to the diode, or the switch and the diode that are connected in parallel are connected in series to the fuse; and
the fuse is configured to:
when currents at the group of load terminals corresponding to the isolated DC-DC conversion circuit are greater than a second preset current value, disconnect a circuit between the output end of the isolated DC-DC conversion circuit and the corresponding group of load terminals, wherein the second preset current value is greater than a maximum output current of the isolated DC-DC conversion circuit.

8. The DC-DC conversion apparatus for a charging pile according to any one of claims 2 to 4, wherein the primary-side circuit comprises a plurality of switching transistors, and the controller is further configured to:
when a difference between the output voltage of the isolated DC-DC conversion circuit and a required output voltage is greater than a second preset voltage difference, adjust switching frequencies of the plurality of switching transistors in the primary-side circuit.

9. The DC-DC conversion apparatus for a charging pile according to claim 8, wherein the controller is further configured to:
when an input current of the isolated DC-DC conversion circuit is greater than a third preset current value, turn off the plurality of switching transistors in the primary-side circuit.

10. The DC-DC conversion apparatus for a charging pile according to claim 4, wherein the primary-side circuit further comprises a turns-switching switch circuit, and the turns-switching switch circuit is connected to the three-phase primary-side winding; and
the turns-switching switch circuit is configured to switch a quantity of turns, connected to a circuit, of each phase of primary-side winding in the three-phase primary-side winding.

11. The DC-DC conversion apparatus for a charging pile according to claim 10, wherein the inverter circuit comprises three inverter bridge arms that are connected in parallel;
each phase of primary-side winding in the three-phase primary-side winding comprises a first primary-side winding and a second primary-side winding, one end of each of the three first primary-side windings is connected to each of three bridge arm midpoints of the three inverter bridge arms in a one-to-one correspondence, the other end of a first primary-side winding in one phase of primary-side winding is connected to one end of a second primary-side winding in the one phase of primary-side winding to form a tap, and the other ends of three second primary-side windings are connected to each other;
the turns-switching switch circuit comprises two turns-switching switches, the two turns-switching switches are in a one-to-one correspondence with the other two phases of primary-side windings, and each turns-switching switch comprises a movable contact, a first stationary contact, and a second stationary contact; and
the movable contact of each turns-switching switch is connected to the other end of a first primary-side winding in one corresponding phase of primary-side winding, the first stationary contact of each turns-switching switch is connected to one end of a second primary-side winding in the corresponding phase of primary-side winding, and the second stationary contact of each turns-switching switch is connected to the tap, wherein
the movable contact of each turns-switching switch is connected to the first stationary contact of the turns-switching switch, or the movable contact of each turns-switching switch is connected to the second stationary contact of the turns-switching switch.

12. The DC-DC conversion apparatus for a charging pile according according to claim 4, wherein the secondary-side circuit further comprises a connection-switching switch circuit, and the plurality of rectifier circuits comprise two rectifier circuits;
output ends of the two rectifier circuits are connected to each other through the connection-switching switch circuit and then connected to the corresponding group of load terminals; and
the connection-switching switch circuit is configured to switch the two rectifier circuits to be connected in series or in parallel.

13. The DC-DC conversion apparatus for a charging pile according according to claim 12, wherein an output end of each of the two rectifier circuits comprises a positive output end and a negative output end, the connection-switching switch circuit comprises one series-connection switch and two parallel-connection switches, the series-connection switch is configured to connect the two rectifier circuits in series, and the two parallel-connection switches are configured to connect the two rectifier circuits in parallel, wherein
a positive output end of one of the two rectifier circuits is connected to a positive load terminal in the corresponding group of load terminals, and a negative output end of the other rectifier circuit is connected to a negative load terminal in the corresponding group of load terminals;
the series-connection switch is connected between a negative output end of the one rectifier circuit and a positive output end of the other rectifier circuit; and
one parallel-connection switch is connected between the negative output end of the one rectifier circuit and the negative output end of the other rectifier circuit, and the other parallel-connection switch is connected between the positive output end of the one rectifier circuit and the positive output end of the other rectifier circuit.

14. The DC-DC conversion apparatus for a charging pile according to claim 13, wherein each rectifier circuit comprises six rectifier bridge arms that are connected in parallel, and the plurality of secondary-side windings comprise a first secondary-side winding and a second secondary-side winding, wherein
two ends of each first secondary-side winding of the transformer are connected to two bridge arm midpoints of two rectifier bridge arms in the one rectifier circuit in a one-to-one correspondence, and different first secondary-side windings are connected to different rectifier bridge arms; and
two ends of each second secondary-side winding of the transformer are connected to two bridge arm midpoints of two rectifier bridge arms in the other rectifier circuit in a one-to-one correspondence, and different second secondary-side windings are connected to different rectifier bridge arms.

15. A charging pile, wherein the charging pile comprises a direct current bus, an alternating current-direct current AC-DC conversion apparatus, a charging connector, and the direct current-direct current DC-DC conversion apparatus for a charging pile according to any one of claims 1 to 14, wherein
the AC-DC conversion apparatus is configured to convert a received alternating current into a direct current and then output the direct current to the direct current bus, and the DC-DC conversion apparatus for a charging pile according is configured to obtain the direct current from the direct current bus, perform power conversion on the direct current, and then output the direct current to the charging connector.
